(19) Europäisches Patentamt
European Patent Office
Office européen des brevets

(11) **EP 4 773 073 A1**

(12) **EUROPEAN PATENT APPLICATION**
published in accordance with Art. 153(4) EPC

(43) Date of publication:
**08.07.2026 Bulletin 2026/28**

(21) Application number: **23950858.3**

(22) Date of filing: **27.11.2023**

(51) International Patent Classification (IPC):
***G06T 7/00*** ^(2017.01)

(52) Cooperative Patent Classification (CPC):
**G06T 7/00**

(86) International application number:
**PCT/JP2023/042375**

(87) International publication number:
**WO 2025/046917 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.08.2023 US 202363579460 P**

(71) Applicant: **Sony Group Corporation
Tokyo 108-0075 (JP)**

(72) Inventors:
• **SASAKI, Toshiyuki**
  **Atsugi-shi, Kanagawa 243-0014 (JP)**
• **SUTOU, Yasuhiro**
  **Atsugi-shi, Kanagawa 243-0014 (JP)**
• **MOTOYAMA, Takuto**
  **Atsugi-shi, Kanagawa 243-0014 (JP)**
• **TIAN, Guifen**
  **Atsugi-shi, Kanagawa 243-0014 (JP)**
• **YAMAZAKI, Toshio**
  **Atsugi-shi, Kanagawa 243-0014 (JP)**
• **OISHI, Kei**
  **Atsugi-shi, Kanagawa 243-0014 (JP)**
• **YANG, Seungha**
  **Atsugi-shi, Kanagawa 243-0014 (JP)**
• **NONAKA, Soma**
  **Atsugi-shi, Kanagawa 243-0014 (JP)**
• **DOBA, Kentaro**
  **Atsugi-shi, Kanagawa 243-0014 (JP)**

(74) Representative: **2SPL Patentanwälte PartG mbB
Landaubogen 3a
81373 München (DE)**

(54) **INFORMATION PROCESSING DEVICE, INFORMATION PROCESSING METHOD, AND COMPUTER-READABLE NON-TRANSITORY STORAGE MEDIUM**

(57) To improve robustness of an inferencer.

Provided is an information processing device including: an inference unit configured to perform inference based on input sensing data, by using an inferencer generated by learning using masked sensing data as learning data; and an abnormality detection unit configured to detect an abnormality related to a sensor that has acquired sensing data, in which, when the abnormality detection unit detects an abnormality in a sensor that has acquired sensing data, the abnormality detection unit masks the sensing data acquired by the sensor and inputs the sensing data to the inference unit, the inference unit performs inference on the basis of masked sensing data input by the abnormality detection unit, and at least a part of the learning data is generated using generative AI.

FIG. 2

## Description

TECHNICAL FIELD

The present disclosure relates to an information processing device, an information processing method, and a non-transitory computer-readable storage medium.

BACKGROUND ART

In recent years, a technology for improving inference accuracy of an inferencer generated by machine learning has been developed. For example, Patent Document 1 discloses a technique for recognizing raindrops attached to a windshield of a vehicle with high accuracy by using learning data generated using a transparent plate to which raindrops are attached.

CITATION LIST

PATENT DOCUMENT

Patent Document 1: Japanese Patent Application Laid-Open No. 2021-61524

SUMMARY OF THE INVENTION

PROBLEMS TO BE SOLVED BY THE INVENTION

However, the technique disclosed in Patent Document 1 is specialized for recognizing raindrops, and there is a limitation on variations of generated learning data.

SOLUTIONS TO PROBLEMS

According to one aspect of the present disclosure, there is provided an information processing device including: an inference unit configured to perform inference based on input sensing data, by using an inferencer generated by learning using masked sensing data as learning data; and an abnormality detection unit configured to detect an abnormality related to a sensor that has acquired sensing data, in which, when the abnormality detection unit detects an abnormality in a sensor that has acquired sensing data, the abnormality detection unit masks the sensing data acquired by the sensor and inputs the sensing data to the inference unit, the inference unit performs inference on the basis of masked sensing data input by the abnormality detection unit, and at least a part of the learning data is generated using generative AI.

Furthermore, according to another aspect of the present disclosure, there is provided an information processing method performed by a processor, the information processing method including: performing inference based on input sensing data, by using an inferencer generated by learning using masked sensing data as learning data; and detecting an abnormality related to a sensor that has acquired sensing data, in which the detecting an abnormality includes, when an abnormality is detected in a sensor that has acquired sensing data, masking the sensing data acquired by the sensor, the performing inference includes performing inference on the basis of masked sensing data, and at least a part of the learning data is generated using generative AI.

Furthermore, according to another aspect of the present disclosure, there is provided a non-transitory computer-readable storage medium storing a program causing a computer to function as an information processing device including: an inference unit configured to perform inference based on input sensing data, by using an inferencer generated by learning using masked sensing data as learning data; and an abnormality detection unit configured to detect an abnormality related to a sensor that has acquired sensing data, in which, when the abnormality detection unit detects an abnormality in a sensor that has acquired sensing data, the abnormality detection unit masks the sensing data acquired by the sensor and inputs the sensing data to the inference unit, the inference unit performs inference on the basis of masked sensing data input by the abnormality detection unit, and at least a part of the learning data is generated using generative AI.

BRIEF DESCRIPTION OF DRAWINGS

Fig. 1 is a diagram for explaining an outline of learning according to an embodiment of the present disclosure.

Fig. 2 is a diagram for explaining an outline of inference using an inferencer generated by learning according to the same embodiment.

Fig. 3 is a block diagram illustrating a functional configuration example of an information processing device 10 according to the same embodiment.

Fig. 4 is a diagram illustrating an architecture example of estimating segmentation, a depth, and objects by sensor fusion using an RGB camera 312, a radar 314, and a LiDAR 316 according to the same embodiment.

Fig. 5 is a diagram for explaining an example of feature quantity fusion according to the same embodiment.

Fig. 6 is a diagram for explaining BEV mapping using camera parameters according to the same embodiment.

Fig. 7 is a diagram for explaining BEV mapping using camera parameters according to the same embodiment.

Fig. 8 is a diagram for explaining a configuration for generating, by an image generation AI 230, an image to be used as learning data 141 on the basis of an image and a selection context 145 that are input according to the same embodiment.

Fig. 9 is a diagram for explaining a configuration for generating, by the image generation AI 230, an image to be used as the learning data 141 on the basis of an image and the selection context 145 that are input according to the same embodiment.

Fig. 10 is a diagram for explaining a configuration for generating, by the image generation AI 230, an image to be used as the learning data 141 on the basis of an annotation and the selection context 145 that are input according to the same embodiment.

Fig. 11 is a diagram for explaining a configuration for generating, by the image generation AI 230, an image to be used as the learning data 141 on the basis of an annotation and the selection context 145 that are input according to the same embodiment.

Fig. 12 is a diagram for explaining a configuration for generating, by the image generation AI 230, an image to be used as the learning data 141 on the basis of an input object movement amount parameter, according to the same embodiment.

Fig. 13 is a diagram for explaining a configuration for generating, by the image generation AI 230, an image to be used as the learning data 141 on the basis of an input object movement amount parameter, according to the same embodiment.

Fig. 14 is a diagram for explaining a configuration for generating, by the image generation AI 230, an image to be used as the learning data 141 on the basis of an input object movement amount parameter, according to the same embodiment.

Fig. 15 is a diagram for explaining a configuration for generating, by the image generation AI 230, an image to be used as the learning data 141 on the basis of an input object movement amount parameter, according to the same embodiment.

Fig. 16 is a diagram for explaining context selection based on inference result analysis according to the same embodiment.

Fig. 17 is a diagram for explaining context selection based on inference result analysis according to the same embodiment.

Fig. 18 is a diagram for explaining context selection based on inference result analysis according to the same embodiment.

Fig. 19 is a diagram for explaining context selection based on inference result analysis according to the same embodiment.

Fig. 20 is a diagram for explaining context selection based on inference result analysis according to the same embodiment.

Fig. 21 is a diagram for explaining a configuration related to generation of the learning data 141 using sensor cleaning according to the same embodiment.

Fig. 22 is a flowchart illustrating an example of a flow of generation of the learning data 141 using sensor cleaning according to the same embodiment.

Fig. 23 is a diagram illustrating an example of a situation of sensing data acquisition by an FMCW LiDAR 317 and the RGB camera 312 according to the same embodiment.

Fig. 24 is a diagram for explaining information desired to be used for learning by an inferencer 210 regarding the situation illustrated in Fig. 23 according to the same embodiment.

Fig. 25 is a diagram for explaining velocity components obtained from Doppler information of each point cloud of the FMCW LiDAR 317 according to the same embodiment.

Fig. 26 is a diagram for explaining a flow of generation of the learning data 141 using the FMCW LiDAR 317 according to the same embodiment.

Fig. 27 is a diagram illustrating an example of mobile body region segmentation according to the same embodiment.

Fig. 28 is a diagram for explaining mobile body region motion calculation according to the same embodiment.

Fig. 29 is a diagram for explaining generation of the learning data 141 based on a result of mobile body region motion calculation and a result of self-motion estimation (motion information of a static region) according to the same embodiment.

Fig. 30 is a diagram for explaining a flow of generation of a large-scale pre-learning data set according to the same embodiment.

Fig. 31 is a diagram for explaining abnormality detection based on a difference map between frames according to the same embodiment.

Fig. 32 is a diagram for explaining abnormality detection based on optical flow bias according to the same embodiment.

Fig. 33 is a diagram for explaining abnormality detection based on reliability of inference according to the same embodiment.

Fig. 34 is a diagram for explaining abnormality detection based on comparison of sensing data accumulated in a steady place according to the same embodiment.

Fig. 35 is a flowchart illustrating an example of a flow of abnormality detection based on a focusing position according to the same embodiment.

Fig. 36 is a flowchart illustrating another example of a flow of abnormality detection based on a focusing position according to the same embodiment.

Fig. 37 is a flowchart illustrating an example of a flow of abnormality detection using a predetermined pattern according to the same embodiment.

Fig. 38 is a diagram illustrating an example of feature points detected from an image obtained by imaging a predetermined pattern according to the same embodiment.

Fig. 39 is a diagram for explaining a flow of contrast learning according to the same embodiment.

Fig. 40 is a diagram for explaining contrastive loss calculation in a contrast learning phase P1 according to the same embodiment.

Fig. 41 is a diagram for explaining abnormality detection based on reliability comparison regarding a plurality of sensors according to the same embodiment.

Fig. 42 is a diagram for explaining a configuration that implements abnormality detection based on integration of inference results derived individually from a plurality of sensors according to the same embodiment.

Fig. 43 is a flowchart illustrating an example of a flow of abnormality detection based on integration of inference results derived individually from a plurality of sensors according to the same embodiment.

Fig. 44 is a flowchart illustrating an example of a flow of notification control based on a self-check result according to the same embodiment.

Fig. 45 is a diagram illustrating a notification example of a coping method and the like according to the same embodiment.

Fig. 46 is a flowchart illustrating an example of a flow of presentation control for a checking method according to the same embodiment.

Fig. 47 is a diagram illustrating a presentation example of the checking method according to the same embodiment.

Fig. 48 is a flowchart illustrating an example of a flow of presentation control for reliability according to the same embodiment.

Fig. 49 is a diagram illustrating a display example of reliability of an inference result according to the same embodiment.

Fig. 50 is a block diagram illustrating a hardware configuration example in a case where a mobile body such as a vehicle is mounted with the information processing device 10 that performs inference using the inferencer 210 and sensor abnormality detection using an abnormality detection model 220 according to the same embodiment.

Fig. 51 is a block diagram illustrating a hardware configuration example of the information processing device 10 that performs generation of the learning data 141, learning using the learning data 141, and the like according to the same embodiment.

MODE FOR CARRYING OUT THE INVENTION

Hereinafter, a preferred embodiment of the present disclosure will be described in detail with reference to the accompanying drawings. Note that, in the present specification and drawings, components having substantially the same functional configuration are denoted by the same reference signs, and redundant description will be omitted.

Furthermore, in the present specification and the drawings, in a case where a plurality of configurations of the same type is distinguished and described, an alphabet or the like may be added to the end of the reference sign. Whereas, in a case where it is not necessary to distinguish a plurality of configurations of the same type, the alphabet or the like described above may be omitted, and a description common to all of the plurality of configurations of the same type may be made.

Note that the description will be given in the following order.

1. Embodiment
1.1. Outline
1.2. Functional configuration example
1.3. Generation of learning data
1.4. Detection method for sensor abnormality by abnormality detection model 220
1.5. Notification control
1.6. Modifications
2. Hardware configuration example
3. Conclusion

<1. Embodiment>

<<1.1. Outline>>

A technology for performing inference of some kind on the basis of sensing data acquired by a sensor has been developed. The technology described above includes a technology called sensor fusion that performs inference by integrating pieces of information obtained from a plurality of sensors.

In a case where inference is performed using sensing data acquired by a plurality of sensors as in sensor fusion, learning of the inferencer is normally performed on an assumption that all the sensors operate normally.

However, in this case, if an abnormality occurs in any of the sensors, inference accuracy is significantly reduced.

Note that, an abnormality related to a sensor includes various instances that may cause a decrease in inference accuracy using sensing data acquired by the corresponding sensor.

Examples of the abnormality related to the sensor include a failure, damage, adhesion of foreign matter (such as contamination or raindrops), and the like.

A technical idea according to an embodiment of the present disclosure has been conceived focusing on the points as described above, and is to improve robustness against an abnormality related to a sensor.

In order to achieve the above, a feature of a learning method according to an embodiment of the present disclosure is using masked sensing data as learning data. That is, in the learning method according to an embodiment of the present disclosure, learning is performed by reproducing a situation where an abnormality occurs in some of the sensors.

Here, an outline of an embodiment of the present disclosure will be described. An embodiment of the present disclosure may be implemented, for example, in the following flow.

(1) A part or the whole of sensing data acquired by each sensor is randomly masked, and learning of an inferencer is performed using the masked sensing data as learning data.
(2) A sensor abnormality detection model is generated in advance.
(3) Sensing data acquired by each sensor is input to the sensor abnormality detection model described above, and an abnormal region is masked.
(4) A user is notified that an abnormality has been detected in a sensor.
(5) Sensing data in which an abnormal region is masked by the abnormality detection model in (3) is input to the inferencer generated in (1), and inference is performed.

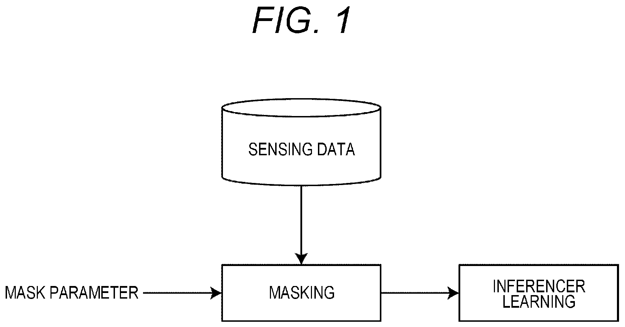

Fig. 1 is a diagram for explaining an outline of learning according to an embodiment of the present disclosure.

As illustrated in Fig. 1, in learning according to the present embodiment, sensing data is masked by using a mask parameter, and learning of an inferencer is performed using the masked sensing data as learning data.

The mask parameter described above may be a variable that determines a shape, a size, an appearance frequency, a value (for example, in a case where the sensing data is an RGB image, 0, 255, or the like), and the like of the mask.

According to the learning data as described above, it is possible to perform learning in which a situation where an abnormality occurs in some of the sensors is reproduced.

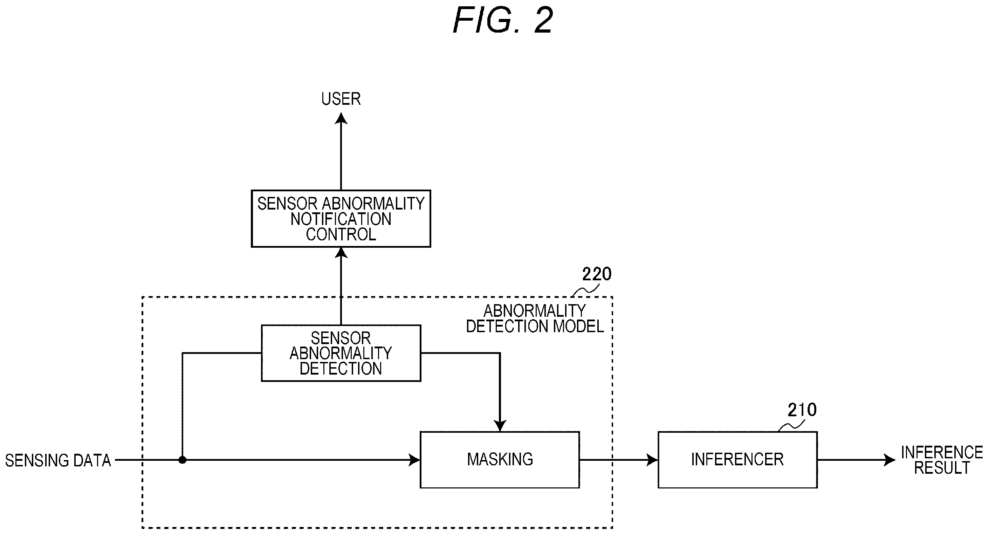

Next, an outline of inference using the inferencer generated by learning will be described with reference to Fig. 2.

As illustrated in Fig. 2, sensing data acquired by sensors is input to an abnormality detection model 220.

The abnormality detection model 220 performs sensor abnormality detection on the input sensing data, and masks an abnormal region of the sensing data when an abnormality is detected.

The sensing data in which the abnormal region is masked by the abnormality detection model 220 is input to an inferencer 210 generated by the learning described with reference to Fig. 1.

The inferencer 210 performs inference on the basis of the sensing data in which the abnormal region is masked, and outputs an inference result.

Furthermore, if an abnormality is detected by the abnormality detection model 220, sensor abnormality notification control is performed, and a user is notified that an abnormality has been detected in a sensor.

According to the configuration described above, it is possible to implement inference with high robustness for a sensor abnormality.

<<1.2. Functional configuration example>>

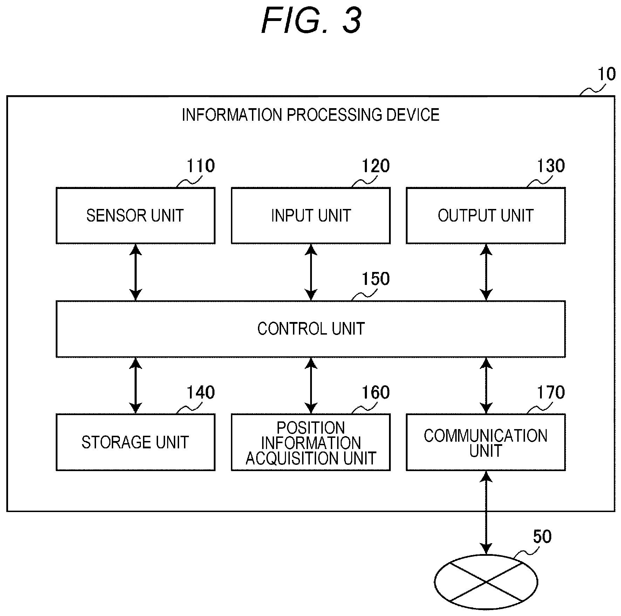

Next, a functional configuration example of an information processing device 10 according to the present embodiment will be described. Fig. 3 is a block diagram illustrating a functional configuration example of the information processing device 10 according to the present embodiment.

The information processing device 10 according to the present embodiment performs at least any processing of: learning related to the inferencer 210; generation of learning data to be used for learning of the inferencer 210; inference using the generated inferencer 210; and abnormality detection using the abnormality detection model 220.

Each of the processing described above may be performed by a single information processing device 10 or may be individually performed by a plurality of information processing devices 10.

As illustrated in Fig. 3, the information processing device 10 according to the present embodiment includes, for example, a sensor unit 110, an input unit 120, an output unit 130, a storage unit 140, a control unit 150, a position information acquisition unit 160, and a communication unit 170.

(Sensor unit 110)

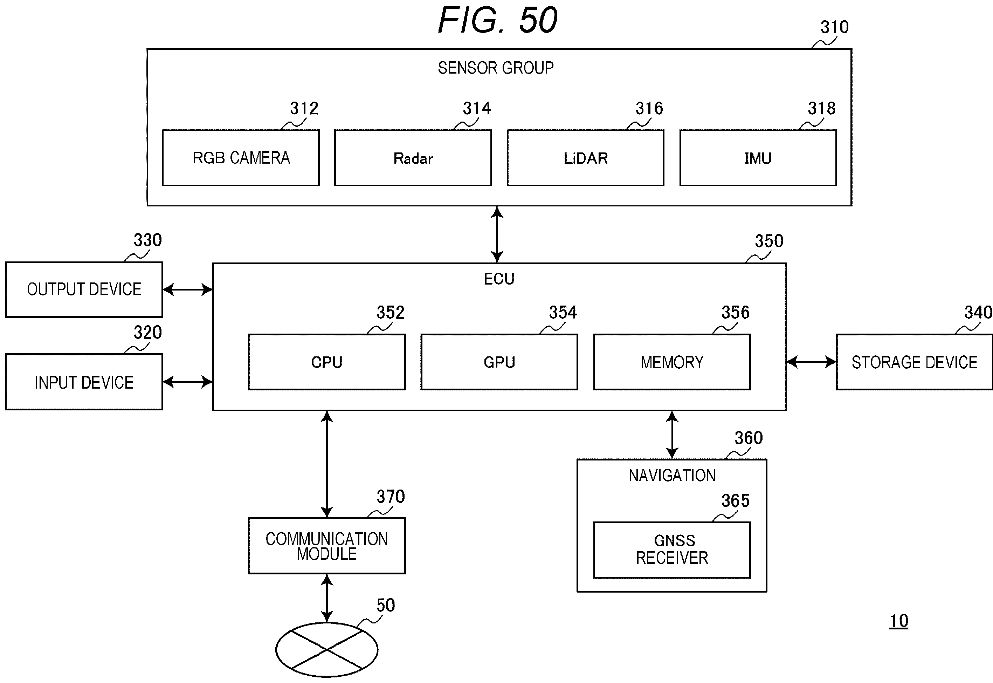

The sensor unit 110 according to the present embodiment includes a plurality of sensors that acquires sensing data. Examples of the sensor included in the sensor unit 110 include an RGB camera 312, a radar 314, a light detection and ranging (LiDAR) 316, an inertial measurement unit (IMU) 318, and the like as illustrated in Fig. 50 and the like.

(Input unit 120)

The input unit 120 according to the present embodiment receives an operation by a user. The input unit 120 includes, for example, a keyboard, a mouse, a microphone, a touch panel, a switch, and the like.

(Output unit 130)

The output unit 130 according to the present embodiment outputs various types of information. The output unit 130 includes, for example, a display, a speaker, and the like.

(Storage unit 140)

The storage unit 140 according to the present embodiment stores various types of information to be used by the information processing device 10.

(Control unit 150)

The control unit 150 according to the present embodiment controls each configuration included in the information processing device 10.

Furthermore, the control unit 150 according to the present embodiment performs at least any processing of: learning related to the inferencer 210; generation of learning data to be used for learning of the inferencer 210; inference using the generated inferencer 210; and abnormality detection using the abnormality detection model 220.

For example, the control unit 150 according to the present embodiment may operate as an inference unit that performs inference based on input sensing data, by using the inferencer 210 generated by learning using masked sensing data as learning data.

Furthermore, for example, the control unit 150 according to the present embodiment may operate as an abnormality detection unit that detects an abnormality related to a sensor that has acquired sensing data, by using the abnormality detection model 220.

Furthermore, for example, the control unit 150 according to the present embodiment may operate as the inference unit described above and the abnormality detection unit described above. In this case, when the control unit 150 according to the present embodiment detects an abnormality in a sensor that has acquired sensing data by using the abnormality detection model 220, the control unit masks sensing data acquired by the sensor and inputs the masked sensing data to the inferencer 210 to perform inference on the basis of the masked sensing data.

(Position information acquisition unit 160)

The position information acquisition unit 160 according to the present embodiment acquires a position of the information processing device 10. For this purpose, the position information acquisition unit 160 according to the present embodiment includes a global navigation satellite system (GNSS) receiver 365, for example, as illustrated in Fig. 50 and the like.

(Communication unit 170)

The communication unit 170 according to the present embodiment performs information communication with another device via a network 50. The network 50 includes, for example, the Internet, a local area network (LAN), a public network, and the like.

The functional configuration example of the information processing device 10 according to the present embodiment has been described above. Note that the functional configuration described above with reference to Fig. 3 is merely an example, and the functional configuration of the information processing device 10 is not limited to such an example.

The functional configuration of the information processing device 10 according to the present embodiment can be flexibly modified according to specifications, operations, and the like.

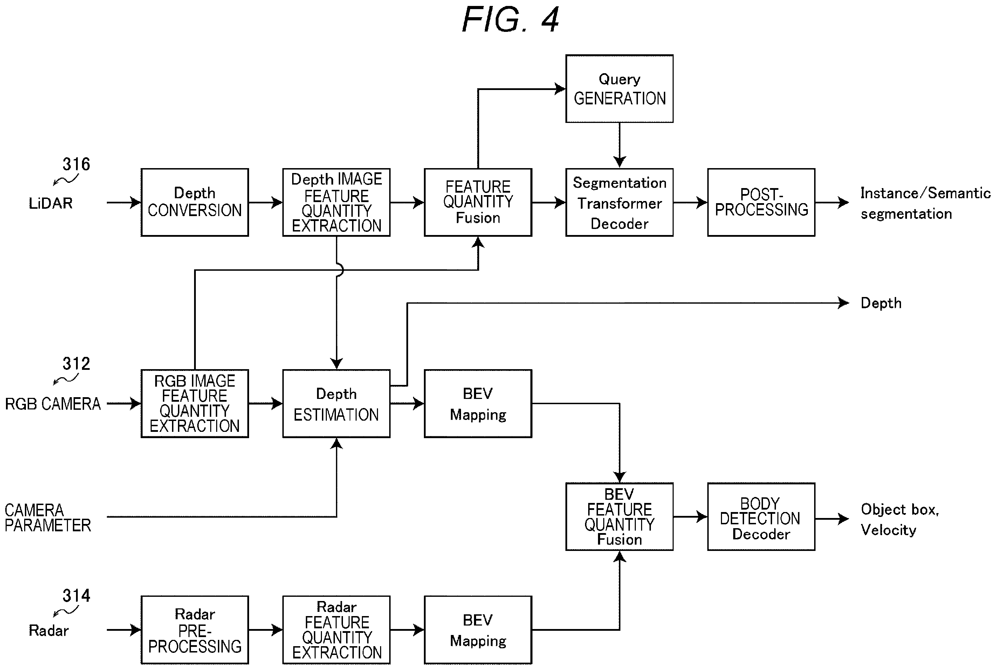

Next, an example of an architecture for implementing inference according to the present embodiment will be described with reference to Figs. 4 to 7.

Fig. 4 is a diagram illustrating an architecture example for estimating segmentation, a depth, and an object by sensor fusion using the RGB camera 312, the radar 314, and the LiDAR 316.

First, estimation of panoptic segmentation by sensor fusion using the RGB camera 312 and the LiDAR 316 will be described.

A 3D point cloud acquired by the LiDAR 316 is first subjected to depth conversion. The depth conversion is processing of converting a 3D point cloud acquired by the LiDAR 316 into a 2D depth image.

Next, feature quantity extraction (depth image feature quantity extraction) from the depth image obtained as described above is performed.

Furthermore, feature quantity extraction (RGB image feature quantity extraction) from the RGB image acquired by the RGB camera 312 is performed.

The depth image feature quantity extraction and the RGB image feature quantity extraction may be performed by a network configuration using a convolutional neural network (CNN), a deformable CNN, or Transformer. Furthermore, a pixel decoder may be added after the CNN or the Transformer to aggregate features between Multiscales. Note that a network for performing the depth image feature quantity extraction and a network for performing the RGB image feature quantity extraction may be separately prepared or may be the same.

Next, feature quantity fusion of fusing a depth image feature quantity and an RGB image feature quantity is performed.

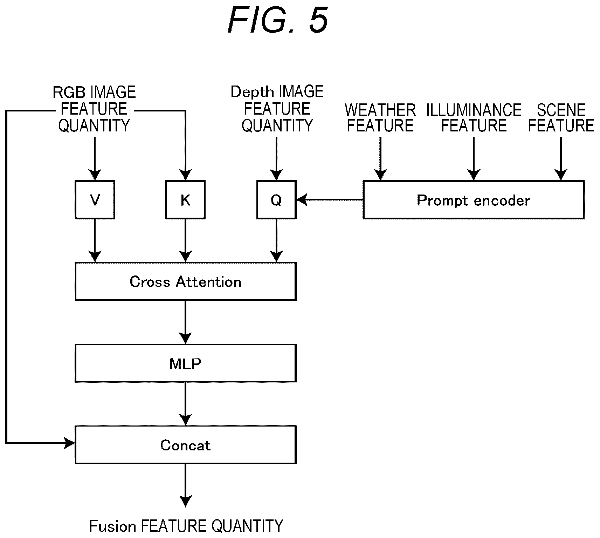

Fig. 5 is a diagram for explaining an example of the feature quantity fusion according to the present embodiment.

In a case of the example illustrated in Fig. 5, a vector expressing a weather feature, a vector expressing an illuminance feature, a vector expressing a scene feature, and the like are input to a prompt encoder.

The prompt encoder includes a multilayer perceptron (MLP) of a plurality of layers, and repeatedly executes processing of embedding the input vectors in a high dimension and then converting the vectors into a one-hot vector.

Next, cross attention is performed using a query (Q) obtained by multiplying the one-hot vector by a channel of the depth image feature quantity, and using the RGB image feature quantity as a value (V) and a key (K), and a fusion feature quantity is acquired by concatenating a result of the cross attention and the original RGB image feature quantity.

According to the processing as described above, capturing of the depth feature quantity can be optimized with the weather feature, the illuminance feature, and the scene feature.

Note that the query (Q), the value (V), and the key (K) illustrated in Fig. 5 are merely examples, and can be flexibly modified.

The description will be continued again with reference to Fig. 4.

The fusion feature quantity obtained as described above is input to a segmentation transformer decoder together with a query generated on the basis of the fusion feature quantity. The segmentation transformer decoder is a decoder of panoptic segmentation of performing segmentation of an image region mask of the same category without distinguishing between a background and a foreground.

A processing result of the segmentation transformer decoder is subjected to post-processing, and a result of instance segmentation is acquired as a result of semantic segmentation.

Note that the above-described post-processing includes processing of outputting individual masks of objects (a person, a car, a bicycle, and the like) whose number can be counted, so as to be distinguished as individual instances from the result of panoptic segmentation.

Furthermore, the above-described post-processing includes processing of grouping pixels having the same category from the result of panoptic segmentation, and outputting a classification result of the category in units of pixels as an image.

Next, estimation of a depth, an object box, and a velocity by sensor fusion using the RGB camera 312, the radar 314, and the LiDAR 316 will be described.

First, depth estimation is performed on the basis of the extracted depth image feature quantity and RGB image feature quantity, and camera parameters.

The camera parameters described above are various parameters for projecting a point cloud of the LiDAR 316 onto the RGB image, and include, for example, information such as an orientation (rotation matrix) and a position (translation vector) of the RGB camera 312 camera, a focal length, and a center position of a lens.

Next, a birds eye view (BEV) mapping based on the depth estimated as described above is performed.

Whereas, various types of pre-processing and radar feature quantity extraction are performed on a point cloud acquired by the radar 314, and the BEV mapping is performed on the basis of the extracted radar feature quantity.

Subsequently, BEV feature quantity fusion based on a result of the BEV mapping based on the depth and a result of the BEV mapping based on the radar feature quantity is performed, and the obtained fusion feature quantity is input to a body detection decoder to acquire estimation results of the object box and the velocity.

According to the above-described architecture described with reference to Figs. 4 and 5, estimation accuracy of each task can be improved as compared with the related art.

However, the architecture illustrated in Figs. 4 and 5 is merely an example, and the architecture according to the present embodiment can be flexibly modified.

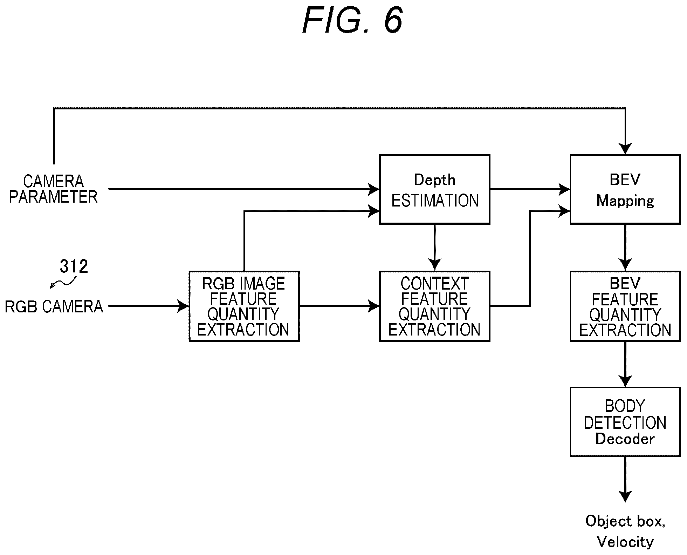

For example, as illustrated in Fig. 6, the BEV mapping according to the present embodiment may be implemented by mapping a two-dimensional feature quantity to the BEV by using the estimated depth and the camera parameters. In this case, by explicitly calculating the depth inside a model, an effect of improving detection accuracy of the object is expected.

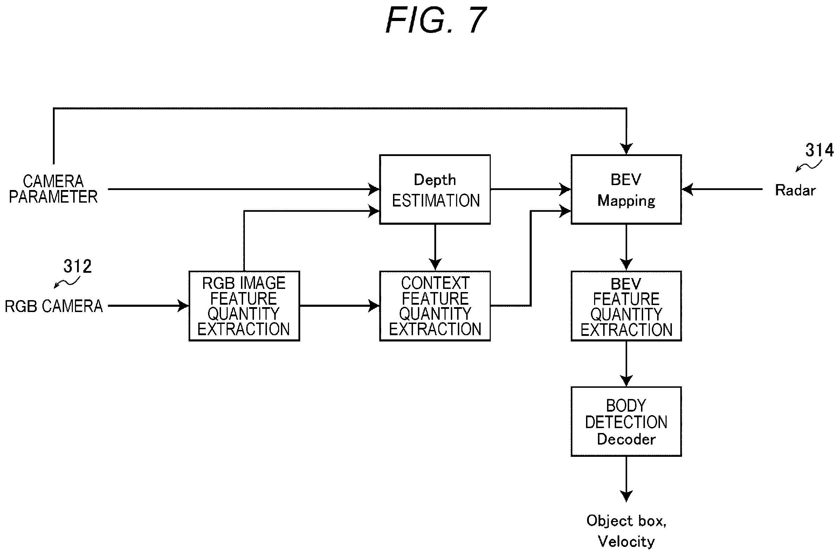

Furthermore, in the BEV mapping according to the present embodiment, information obtained by the radar 314 may be further used as illustrated in Fig. 7.

In this case, the BEV mapping is performed using information about xyz acquired by the radar 314 and a rotation translation matrix of the radar 314. At this time, in a case where there is no metadata such as velocity information, only information as an occupancy is included. Therefore, it suffices that the RGB image feature quantity is concatenated with a result having a dimension number 1 as a dimension number indicating whether there is a detection point. Whereas, in a case where there is metadata, it suffices that a result corresponding to a dimension number of the metadata is concatenated to the RGB image feature quantity.

By using the information obtained by the radar 314 for BEV mapping, improvement of velocity estimation accuracy is expected.

Furthermore, in the BEV mapping according to the present embodiment, an extracted context feature quantity may be further used as illustrated in Figs. 6 and 7.

<<1.3. Generation of learning data>>

Next, a generation method for learning data according to the present embodiment will be described.

At least a part of learning data according to the present embodiment may be generated using generative artificial intelligence (AI).

Hereinafter, generation of learning data 141 using an image generation AI 230 will be described.

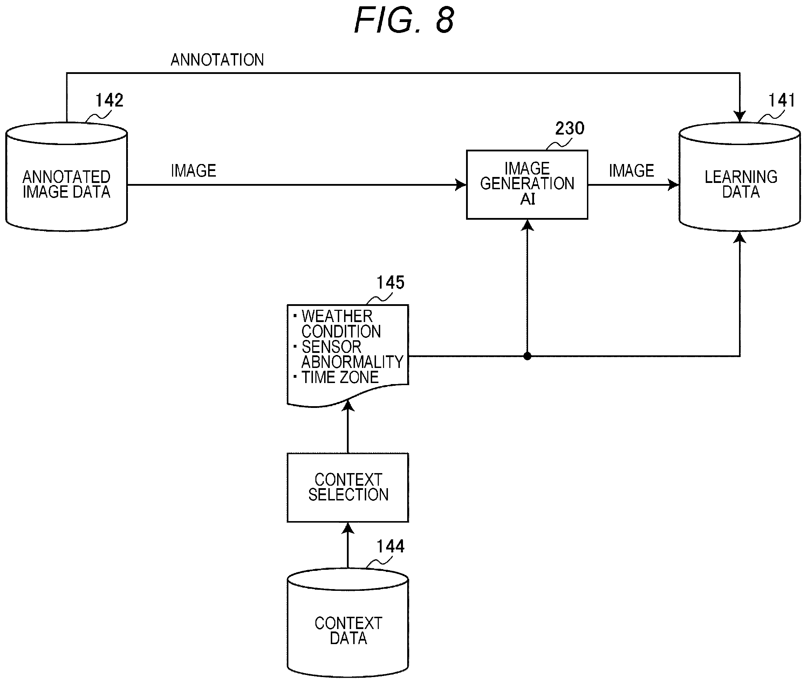

Fig. 8 is a diagram for explaining a configuration for generating, by the image generation AI 230, an image to be used as the learning data 141 on the basis of an image and a selection context 145 that are input according to the present embodiment.

In a case of the example illustrated in Fig. 8, an image (live-action image, computer graphics (CG)) of annotated image data 142 prepared in advance is input to the image generation AI 230.

Furthermore, for example, the selection context 145 randomly selected from context data 144 is input to the image generation AI 230 together with the image described above.

The context data 144 includes, for example, variation information regarding each of various items such as a weather condition, time of day, a sensor abnormality, solar radiation, and a place.

Examples of variations regarding a weather condition include sunny, rain, cloudy, snow, lightning, stormy winds, fog, and the like.

Furthermore, examples of variations regarding time of day include morning, daytime, evening, night, early morning, and the like.

Furthermore, examples of variations regarding a sensor abnormality include water droplet adhesion, mud adhesion, internal failure, breakage, and the like.

Furthermore, examples of variations regarding solar radiation include front lighting, back lighting, afternoon sunlight, and the like.

Furthermore, examples of variations regarding a place include an intersection, a motor vehicle-only road, an expressway, a railroad crossing, an agricultural road, an unpaved road, and the like.

The control unit 150 selects one element from the variations described above for each item included in the context data 144.

For example, the control unit 150 selects a set of "weather condition: sunny", "time of day: evening", "sensor abnormality: mud adhesion", "solar radiation: afternoon sunlight", "place: intersection", and the like from the context data 144, and inputs the selected set to the image generation AI 230 as the selection context 145.

The image generation AI 230 generates an image on the basis of the input selection context 145 and image.

The image generated by the image generation AI 230 is used as the learning data 141 in association with the selection context 145 and an annotation extracted from the annotated image data 142.

According to the method as described above, it is possible to generate a large amount of the learning data 141 reflecting various environments, sensor abnormalities, and the like in a short time.

Furthermore, robustness of the inferencer 210 can be improved by performing learning of the inferencer 210 by using a wide variety and a large amount of the learning data 141.

Note that a developer may be able to select the context.

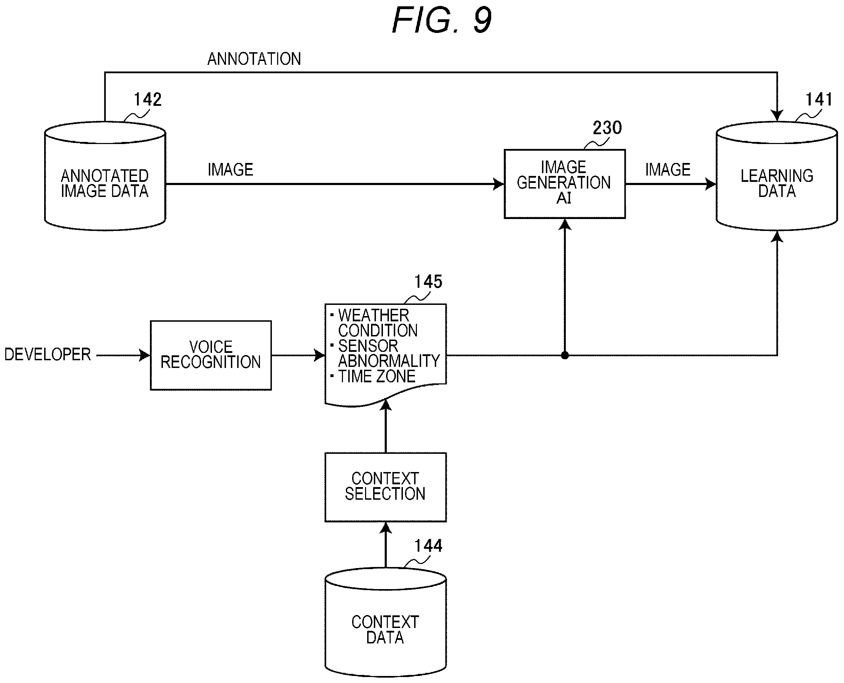

For example, Fig. 9 illustrates a configuration in which the selection context 145 is determined by performing voice recognition on a developer's utterance.

Such a configuration is particularly effective in a case where it is desired to prepare the learning data 141 having a feature of a specific context.

Furthermore, the image generation AI 230 according to the present embodiment may generate an image to be used as the learning data 141 on the basis of the selection context 145 and the annotation.

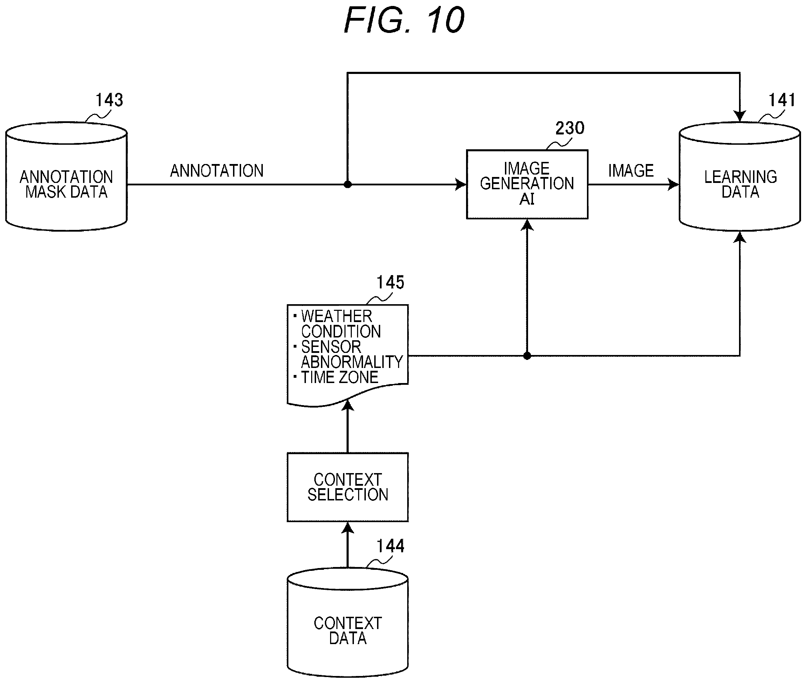

Fig. 10 is a diagram for explaining a configuration for generating, by the image generation AI 230, an image to be used as the learning data 141 on the basis of an annotation and the selection context 145 that are input according to the present embodiment.

In a case of the example illustrated in Fig. 10, an annotation is input to the image generation AI 230 from annotation mask data 143 prepared in advance.

Here, the annotation mask data 143 may be, for example, data having segmentation information and an annotation, as in an estimation result of semantic segmentation.

In this case, the image generation AI 230 generates an image on the basis of the annotation and the selection context 145 that are input.

The image generated by the image generation AI 230 is used as the learning data 141 in association with the selection context 145 and the annotation extracted from the annotation mask data 143.

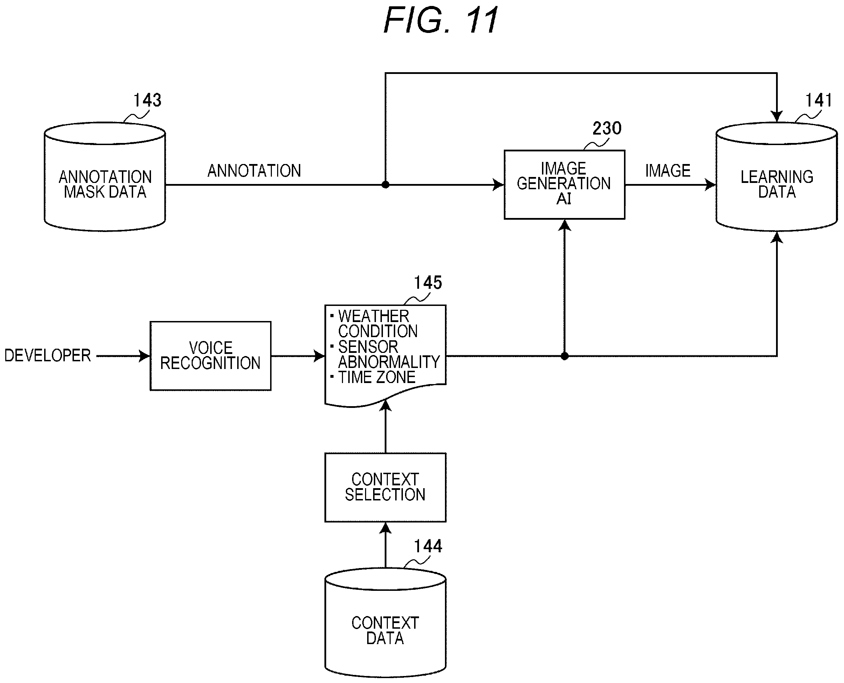

Note that, also in a case where the annotation mask data 143 is used to generate the learning data 141, the developer may be able to select the context as illustrated in Fig. 11.

Furthermore, the image generation AI 230 according to the present embodiment may generate an image to be used as the learning data 141 on the basis of an input object movement amount parameter.

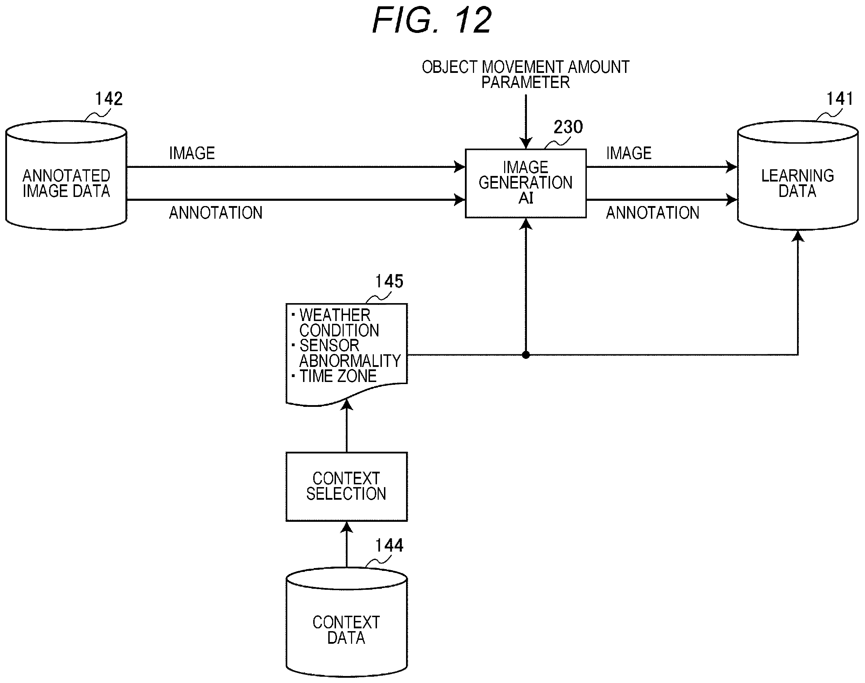

Figs. 12 to 15 are diagrams for explaining a configuration for generating, by the image generation AI 230, an image to be used as the learning data 141 on the basis of an input object movement amount parameter, according to the present embodiment.

Note that Fig. 12 illustrates a configuration in which the annotated image data 142 is used to generate the learning data 141, and context selection can be performed only by the control unit 150.

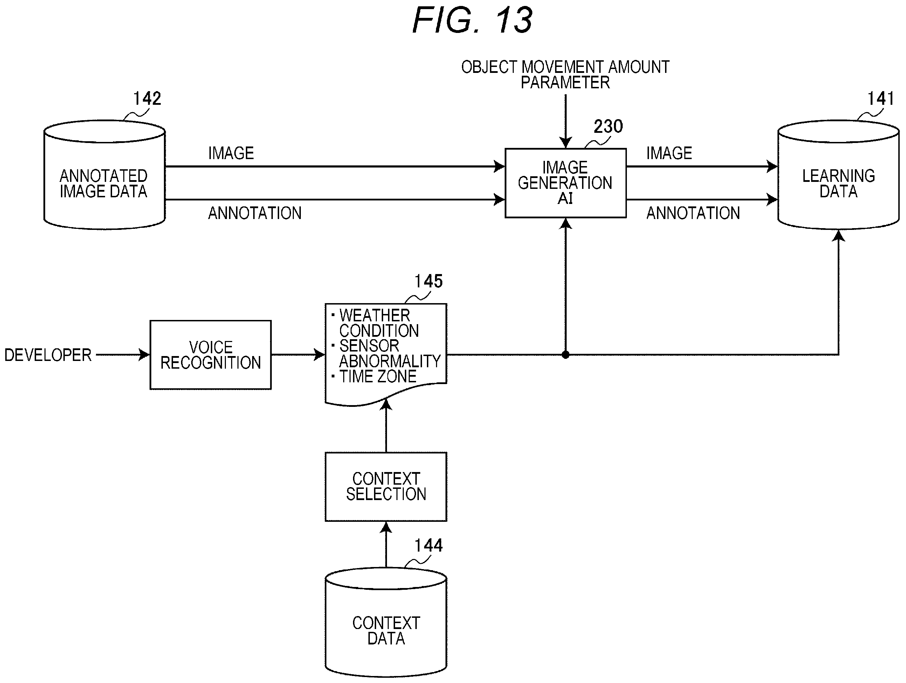

Furthermore, Fig. 13 illustrates a configuration in which the annotated image data 142 is used to generate the learning data 141, and context selection can also be performed by the developer.

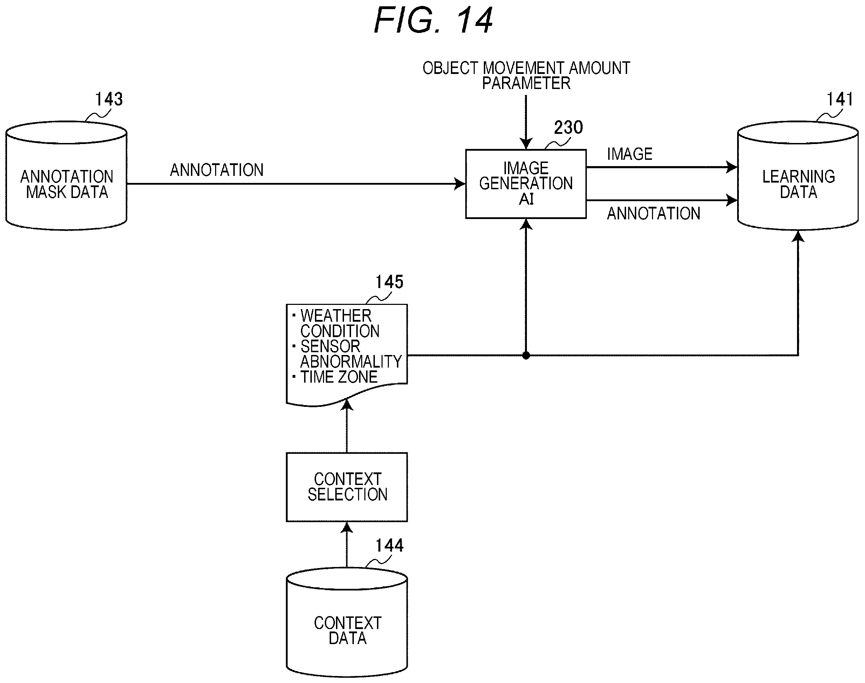

Furthermore, Fig. 14 illustrates a configuration in which the annotation mask data 143 is used to generate the learning data 141, and context selection can be performed only by the control unit 150.

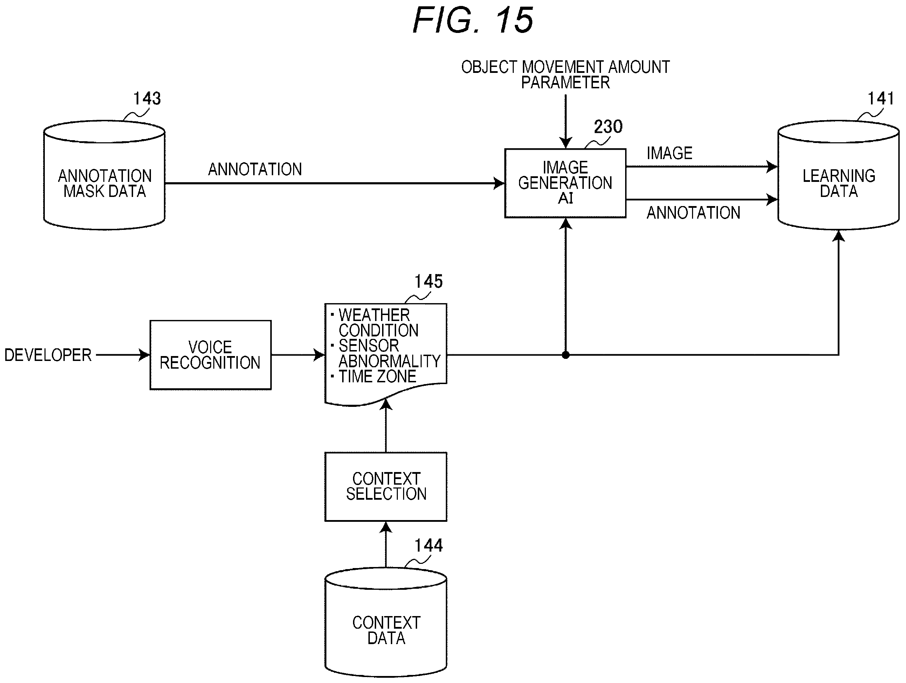

Furthermore, Fig. 15 illustrates a configuration in which the annotation mask data 143 is used to generate the learning data 141, and context selection can also be performed by the developer.

In a case of the example illustrated in Figs. 12 to 15, an object movement amount parameter is input to the image generation AI 230 in addition to the annotation and the image.

Here, the object movement amount parameter may be a parameter for designating a movement amount and a movement direction of an object included in the image.

The image generation AI 230 generates an image in which the object is moved on the basis of the input object movement amount parameter.

According to such a method, it is possible to easily generate the learning data 141 having various variations in a position of the object.

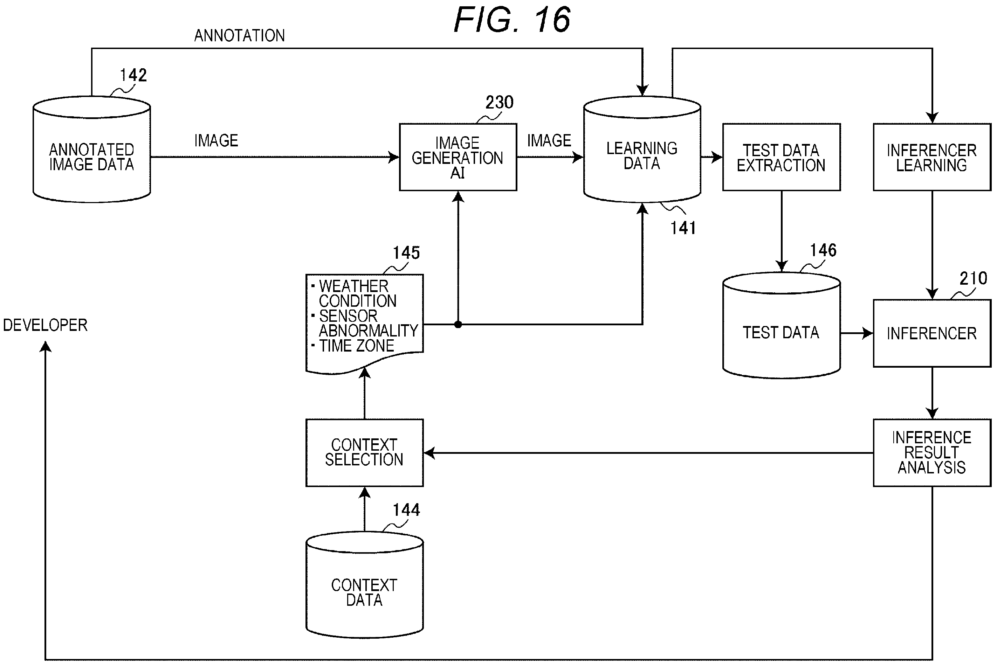

Next, selection of a context based on analysis of an inference result by the inferencer 210 will be described with reference to Figs. 16 to 19.

Note that Fig. 16 illustrates a configuration in which the annotated image data 142 is used to generate the learning data 141, and context selection can be performed only by the control unit 150.

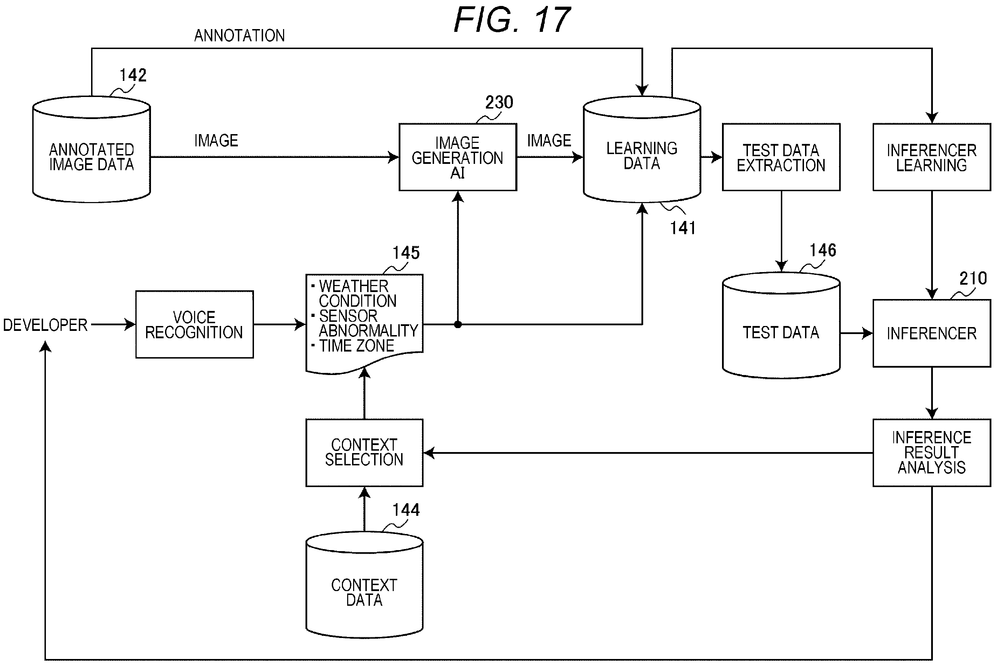

Furthermore, Fig. 17 illustrates a configuration in which the annotated image data 142 is used to generate the learning data 141, and context selection can also be performed by the developer.

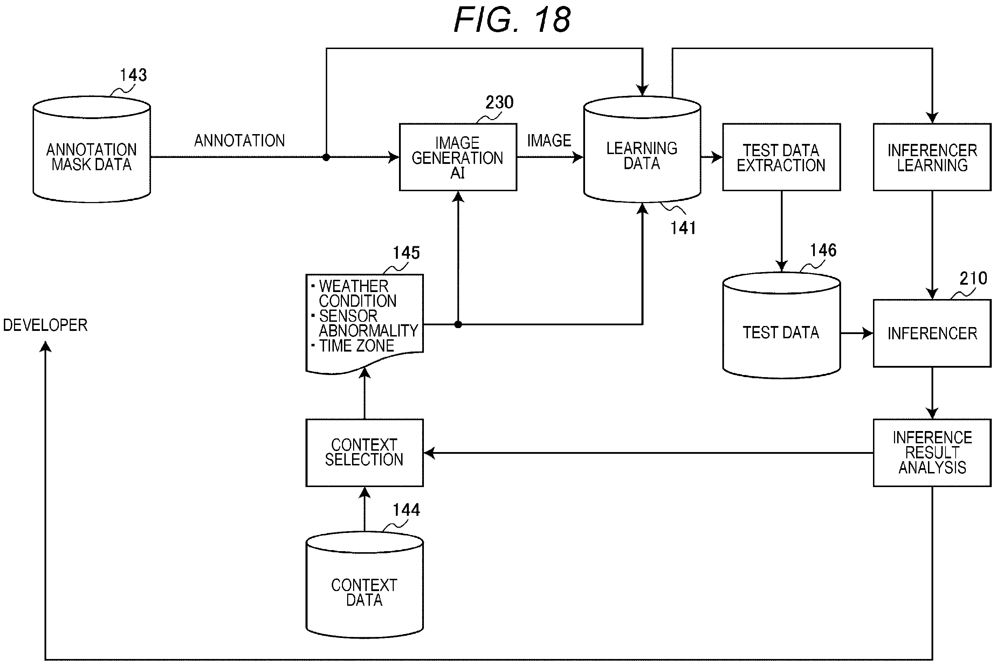

Furthermore, Fig. 18 illustrates a configuration in which the annotation mask data 143 is used to generate the learning data 141, and context selection can be performed only by the control unit 150.

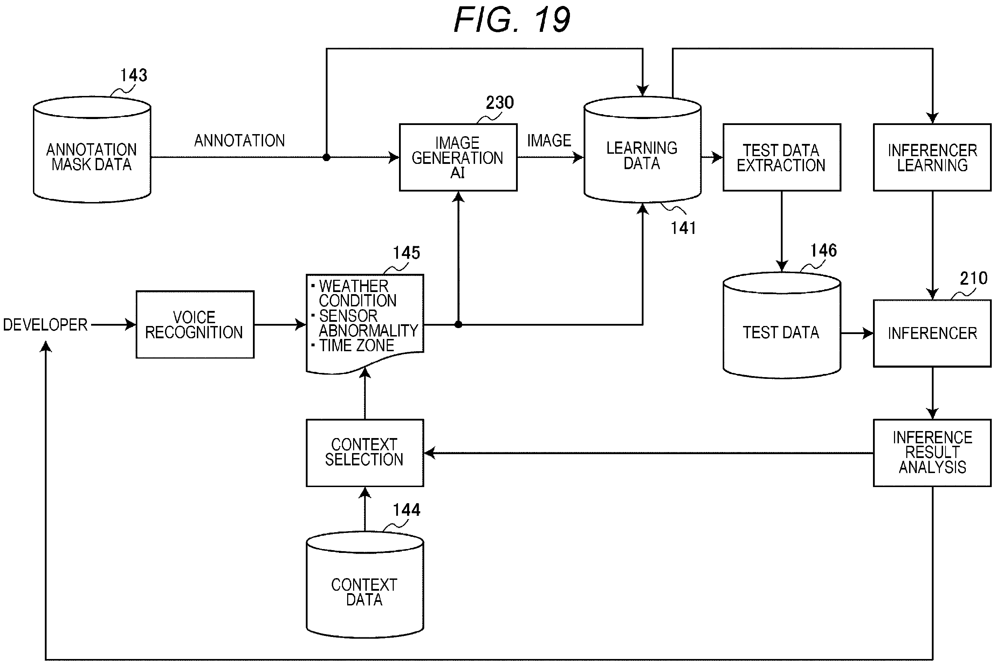

Furthermore, Fig. 19 illustrates a configuration in which the annotation mask data 143 is used to generate the learning data 141, and context selection can also be performed by the developer.

In a case of the examples illustrated in Figs. 16 to 19, inferencer learning is performed using the generated learning data 141 to generate the inferencer 210.

Furthermore, test data 146 is extracted from the generated learning data 141 and input to the inferencer 210.

The inferencer 210 performs inference based on the input test data, and outputs an inference result.

The control unit 150 analyzes the inference result by the inferencer 210, and uses the analysis result for context selection.

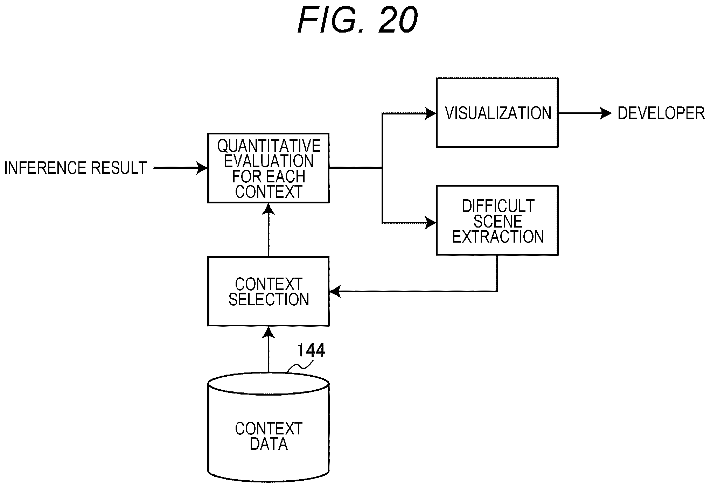

Fig. 20 is a diagram for explaining context selection based on inference result analysis according to the present embodiment.

The control unit 150 first performs quantitative evaluation for each context, regarding the inference result by the inferencer 210. At this time, an evaluation index such as mean IoU may be used in a case where the inference result is semantic segmentation, and an evaluation index such as RMSE, MAE, or REL may be used in a case where the inference result is a depth.

Next, the control unit 150 extracts a difficult scene on the basis of quantitative evaluation results. For example, the control unit 150 may extract a context in which inference accuracy is lower than a set threshold, and a context in which estimation accuracy is significantly lower than average accuracy, and may set a scene related to the extracted context as a difficult scene.

Furthermore, the control unit 150 actively performs context selection related to the difficult scene on the basis of the extracted difficult scene.

According to the processing as described above, it is possible to effectively improve robustness of the inferencer 210, by generating a large amount of the learning data 141 having a context related to a difficult scene and performing learning using the learning data 141.

Furthermore, the control unit 150 may visualize the quantitative evaluation results by using a table, a graph, or the like to present the quantitative evaluation results to the developer.

The generation of the learning data 141 using the image generation AI 230 according to the present embodiment has been described above.

Next, generation of the learning data 141 using sensor cleaning according to the present embodiment will be described.

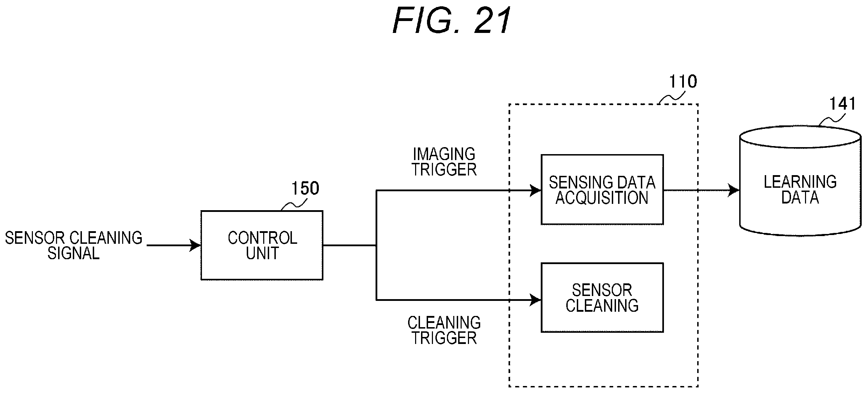

Fig. 21 is a diagram for explaining a configuration related to generation of the learning data 141 using sensor cleaning according to the present embodiment.

In a case of the example illustrated in Fig. 21, the control unit 150 issues an imaging trigger and a cleaning trigger to the sensor unit 110 on the basis of an input sensor cleaning signal, and causes a sensor to perform sensor cleaning and acquisition of sensing data before and after sensor cleaning.

The sensing data before and after sensor cleaning acquired by the control described above is registered as the learning data 141.

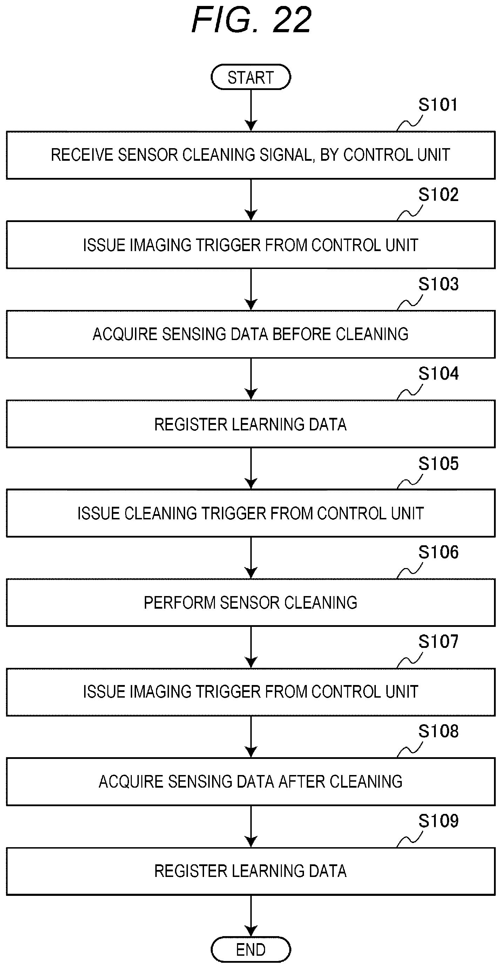

Next, a flow of generation of the learning data 141 using sensor cleaning according to the present embodiment will be described in detail with reference to Fig. 22. Fig. 22 is a flowchart illustrating an example of a flow of generation of the learning data 141 using sensor cleaning according to the present embodiment.

In a case of the example illustrated in Fig. 22, first, the control unit 150 receives a sensor cleaning signal (S101).

The control unit 150 issues an imaging trigger to the sensor unit 110 on the basis of the center cleaning signal received in step S101 (S102).

The sensor unit 110 that has received the imaging trigger in step S102 acquires sensing data before cleaning on the basis of the imaging trigger (S103).

The control unit 150 registers the sensing data before cleaning acquired in step S103 as the learning data 141 (S104).

Next, the control unit 150 issues a cleaning trigger to the sensor unit 110 (S105).

The sensor unit 110 that has received the cleaning trigger in step S105 performs sensor cleaning on the basis of the cleaning trigger (S106).

Next, the control unit 150 issues the imaging trigger to the sensor unit 110 again (S107).

The sensor unit 110 that has received the imaging trigger in step S107 acquires sensing data after cleaning on the basis of the imaging trigger (S108).

The control unit 150 registers the sensing data after cleaning acquired in step S108 as the learning data 141 (S109).

According to the generation method for learning data described above, it is possible to generate a large amount of the learning data 141 with high accuracy and various variations, according to a contamination state of the sensor.

Next, generation of the learning data 141 using a frequency modulated continuous wave (FMCW) LiDAR 317 according to the present embodiment will be described.

The FMCW LiDAR 317 is a LiDAR capable of detecting a distance and a velocity of a body.

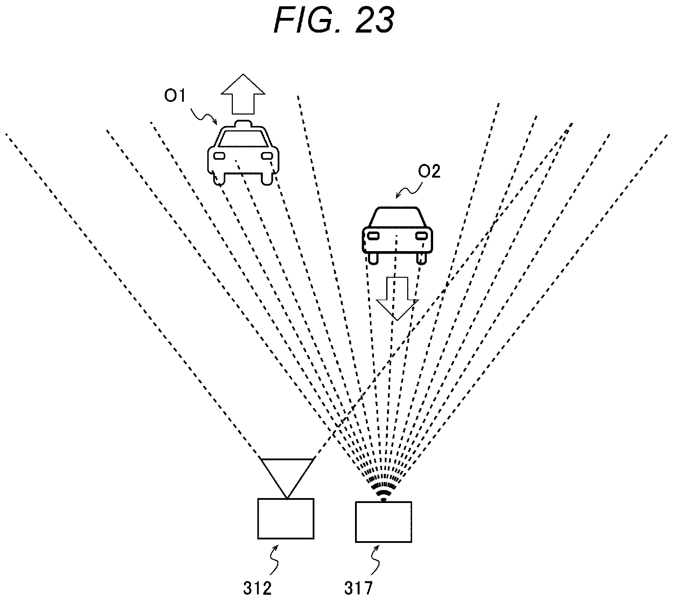

Fig. 23 is a diagram illustrating an example of a situation of sensing data acquisition by the FMCW LiDAR 317 and the RGB camera 312 according to the present embodiment.

In a case of the example illustrated in Fig. 23, the RGB camera 312 captures RGB images of bodies O1 and O2 as subjects, and the FMCW LiDAR 317 can detect distances and velocities of the bodies O1 and O2.

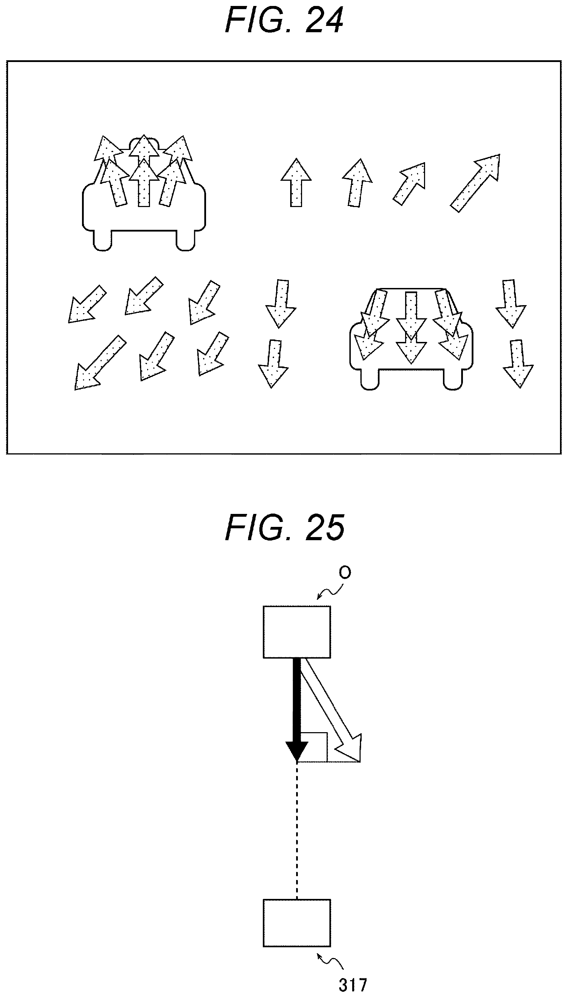

Fig. 24 is a diagram for explaining information desired to be used for learning by the inferencer 210 regarding the situation illustrated in Fig. 23.

As illustrated by dotted arrows in Fig. 24, flow (motion) information in each pixel of an image is required for learning by the inferencer 210.

However, as illustrated in Fig. 25, a velocity component obtained from Doppler information of each point cloud of the FMCW LiDAR 317 is a component (indicated by a black arrow) obtained by projecting an actual relative motion vector (indicated by a white arrow) with respect to a body in a light beam (indicated by a broken line) direction, and thus the velocity component is different from an actual relative motion.

Therefore, in a case where the learning data 141 is generated using the FMCW LiDAR 317, it is necessary to estimate the actual relative motion by using information about a plurality of points.

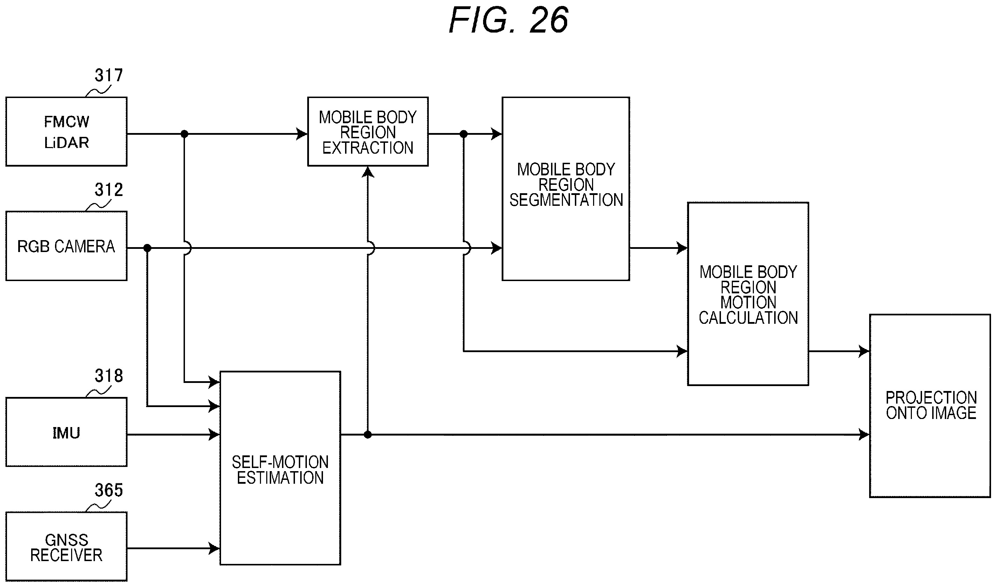

Fig. 26 is a diagram for explaining a flow of generation of the learning data 141 using the FMCW LiDAR 317 according to the present embodiment.

First, the control unit 150 performs self-motion estimation on the basis of information acquired by the FMCW LiDAR 317, the RGB camera 312, the IMU 318, the GNSS receiver 365, and the like.

Next, the control unit 150 performs mobile body region extraction of extracting, from motion information of the FMCW LiDAR 317, only a point cloud of a moving region by canceling a self-motion component obtained by the self-motion estimation described above.

Next, the control unit 150 groups an aggregation of point clouds having a motion and having close distances and motions, and performs mobile body region segmentation of segmenting a body including a motion region of each group on the image.

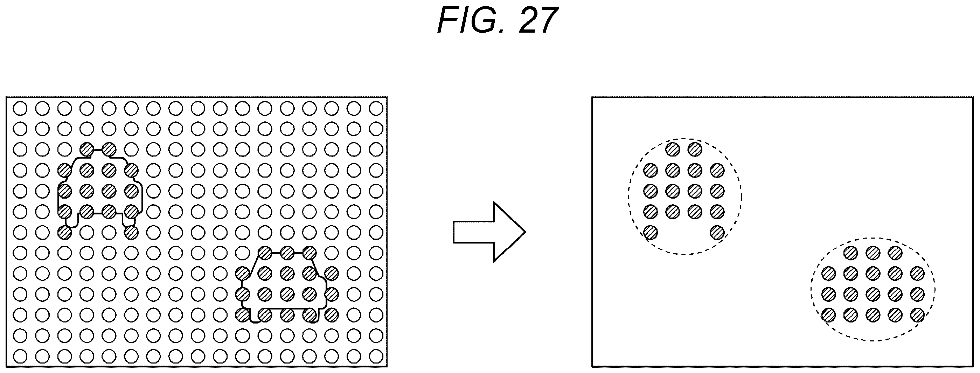

Fig. 27 is a diagram illustrating an example of the mobile body region segmentation according to the present embodiment. In Fig. 27, a point cloud having a motion is illustrated by a hatched circle.

Next, the control unit 150 performs mobile body region motion calculation on the basis of results of the mobile body region extraction and the mobile body region segmentation. The mobile body region motion calculation is processing of calculating a body motion by fitting from motion components of a plurality of points obtained from the FMCW LiDAR 317 in each motion segment.

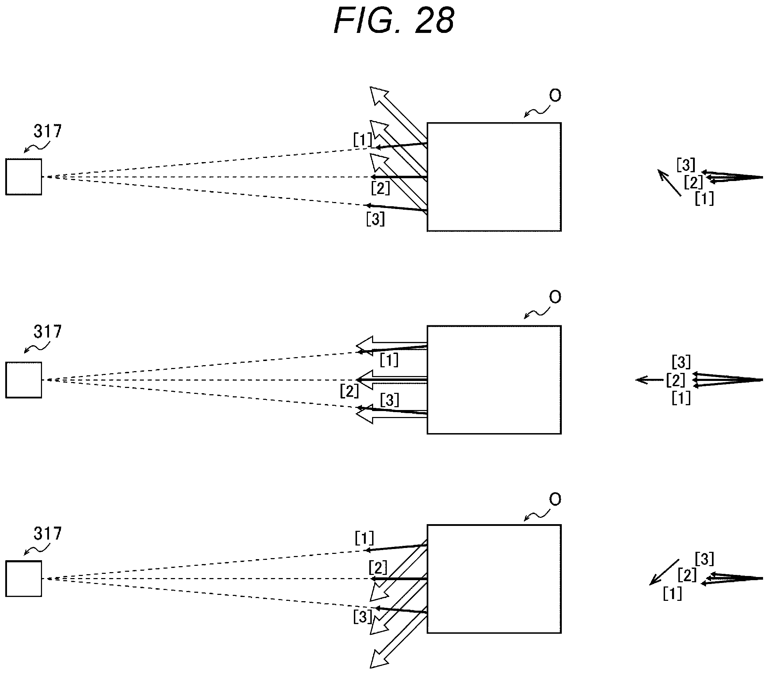

Fig. 28 is a diagram for explaining the mobile body region motion calculation according to the present embodiment.

Note that, in Fig. 28, an actual motion vector of a body O is indicated by a white arrow, and a motion component in each light beam direction obtained by the FMCW LiDAR 317 is indicated by a black arrow.

An upper part of Fig. 28 illustrates an actual motion vector of the body O when the body O moves upward and motion components [1] to [3] in individual light beam directions obtained by the FMCW LiDAR 317.

A middle part of Fig. 28 illustrates an actual motion vector of the body O when the body O moves in the FMCW LiDAR 317 direction and motion components [1] to [3] in individual light beam directions obtained by the FMCW LiDAR 317.

A lower part of Fig. 28 illustrates an actual motion vector of the body O when the body O moves downward and motion components [1] to [3] in individual light beam directions obtained by the FMCW LiDAR 317.

Furthermore, on a right side of each part, a diagram is illustrated in which the motion components [1] to [3] in individual light beam directions are superimposed.

As illustrated in Fig. 28, the motion component obtained by the FMCW LiDAR 317 changes depending on an angle between the light beam direction and the actual motion vector of the body O. Therefore, as long as three or more distance measurement points are obtained, the motion vector of the body O can be calculated by fitting processing.

Finally, the control unit 150 performs projection onto the image on the basis of a result of the mobile body region motion calculation and a result of the self-motion estimation (motion information of a static region), to generate the learning data 141.

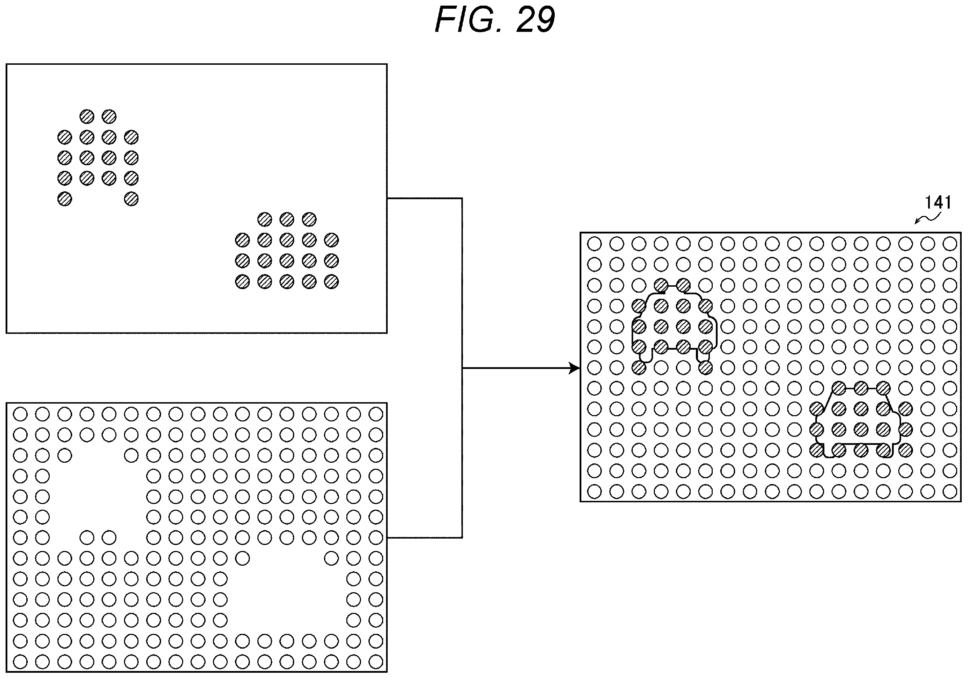

Fig. 29 is a diagram for explaining generation of the learning data 141 based on a result of the mobile body region motion calculation and a result of the self-motion estimation (motion information of a static region) according to the present embodiment.

An upper left part of Fig. 29 illustrates a motion vector for each mobile body region obtained by the mobile body region motion calculation, and a lower left part illustrates a motion vector of a static region calculated from self-motion information and distance data of the point cloud of the FMCW LiDAR 317.

The control unit 150 generates the learning data 141 as illustrated on a right side of Fig. 29, by performing coordinate conversion into a coordinate system of the RGB camera 312 and synthesis of the two motion vectors described above.

According to the method as described above, it is possible to generate a large amount of the learning data 141 at low cost.

Next, generation of a large-scale pre-learning data set according to the present embodiment will be described.

From recent research, it has been found that generalization performance of various tasks is improved by pre-learning a backbone (feature quantity extractor) with a large-scale data set including a pair of similar images and a pair of an image and a text (caption) (image-image contrastive learning and image-text contrastive learning).

However, it is said that a very large amount of data (millions to billions of pieces) is required to perform pre-learning by the method described above, and it has been a problem to prepare a large amount of accurate pairs of images and texts.

Therefore, the present embodiment proposes a method of generating a large number of pairs of images and texts by collating imaged data with map information and performing caption generation and the like using AI.

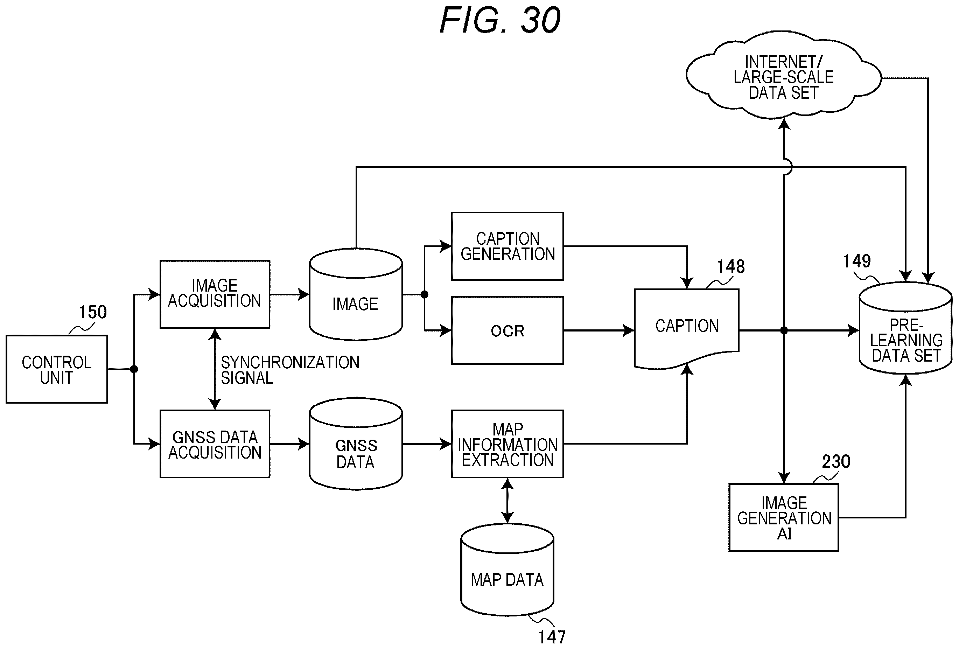

Fig. 30 is a diagram for explaining a flow of generation of a large-scale pre-learning data set according to the present embodiment.

In a case of the example illustrated in Fig. 30, the information processing device 10 is mounted on a data collecting vehicle and acquires a large amount of data by traveling for a long time.

First, image acquisition and GNSS data acquisition are performed on the basis of an imaging trigger issued by the control unit 150. The image acquisition and the GNSS data acquisition are synchronized by a synchronization signal.

A caption 148 is generated from the acquired image by caption generation using AI, optical character reader (OCR), or the like.

Furthermore, the caption 148 may be generated on the basis of map information extracted from map data 147 on the basis of the acquired GNSS data.

According to the generation method for the caption 148 as described above, it is possible to easily acquire a large amount of texts related to place names, addresses, signs, signboards, and other various scenes.

The generated caption 148 is registered in a pre-learning data set 149 in association with the acquired image.

Furthermore, the caption 148 is input to the image generation AI 230, and is registered in the pre-learning data set 149 in association with an image generated by the image generation AI 230.

Furthermore, the caption 148 may be used for searching the Internet or a large-scale data set, and may be registered in the pre-learning data set 149 in association with an image acquired as a search result.

According to the method as described above, it is possible to create a large and accurate data set of images and texts at low cost.

<<1.4. Detection method for sensor abnormality by abnormality detection model 220>>

Next, a detection method for a sensor abnormality by the abnormality detection model 220 according to the present embodiment will be described in detail.

For example, the abnormality detection model 220 according to the present embodiment may detect an abnormality related to a sensor that has acquired sensing data, on the basis of variability in a time direction of the acquired sensing data.

For example, in a case where the sensing data is an image, the abnormality detection model 220 may detect an abnormality related to the sensor on the basis of an image feature quantity in the time direction.

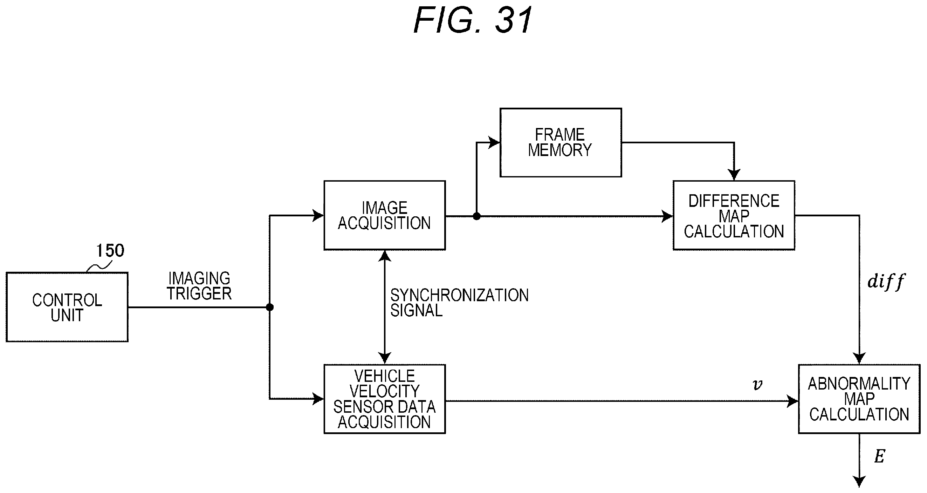

First, abnormality detection based on a difference map between frames according to the present embodiment will be described with reference to Fig. 31. This abnormality detection method is based on prediction that, if there is a region that hardly changes with time on an image although a mobile body such as a vehicle on which the information processing device 10 is mounted is moving, there is a high possibility that an abnormality has occurred in a sensor that has acquired the image.

First, image acquisition and vehicle velocity sensor data acquisition are performed on the basis of an imaging trigger issued by the control unit 150. The image acquisition and the vehicle velocity sensor data acquisition are synchronized by a synchronization signal.

The acquired image is accumulated in a frame memory.

The control unit 150 calculates a difference map diff from the newly acquired image and the image one frame before. The control unit 150 may calculate the difference map diff for each pixel using a sum of absolute difference (SAD), zero-mean normalized cross-correlation (ZNCC), or AI-based matching.

Subsequently, the control unit 150 calculates an abnormality map E on the basis of the calculated difference map diff and a velocity v obtained from vehicle velocity sensor data.

For example, in a case where a parameter upper limit of the difference is $diff_{max}$ and a parameter upper limit of the velocity is $v_{max}$, the control unit 150 calculates the abnormality map E using the following Formula (1).

[Math. 1]

$$E = \left\{ 1 - \frac{min\,(diff,\,diff_{max})}{diff_{max}} \right\} \cdot \frac{min(v,\,v_{max})}{v_{max}}$$

$$\cdots \quad (1)$$

A case of the abnormality map E = 1 indicates that there is a high possibility that there is an abnormality in the sensor. Whereas, a case of the abnormality map E = 0 indicates that there is a high possibility that there is no abnormality in the sensor.

According to the abnormality detection based on the difference between the frames as described above, an abnormality related to a sensor that has acquired the image can be detected with high accuracy.

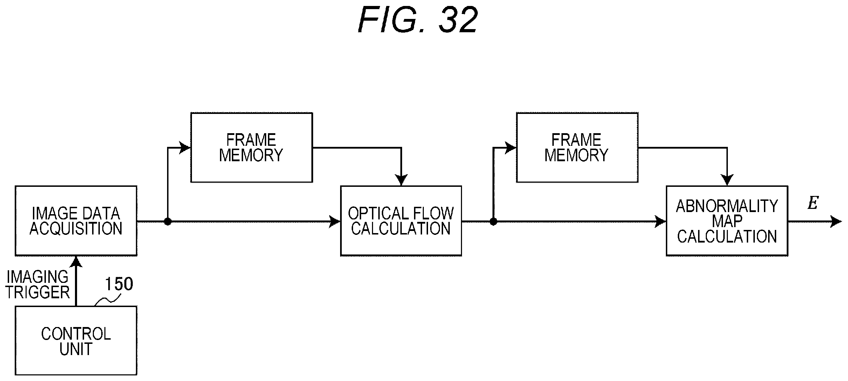

Next, abnormality detection based on optical flow bias according to the present embodiment will be described with reference to Fig. 32. This abnormality detection method is based on prediction that, if there is an abnormality in a sensor that has acquired the image, there is a high possibility that a temporal average of an optical flow will be small because a temporal change on the image is small.

First, image acquisition is performed on the basis of an imaging trigger issued by the control unit 150.

The acquired image is accumulated in a frame memory.

Next, the control unit 150 calculates an optical flow by using a model-based method such as the Lucas-Kanade method or an AI-based method.

The calculated optical flow is accumulated in a frame memory.

The control unit 150 calculates an abnormality map E(x) on the basis of the accumulated optical flow.

For example, in a case where an optical flow at a time t is Ft(x) and a threshold for abnormality determination is $F_{th}$, the control unit 150 calculates the abnormality map E(x) using the following Formula (2).

[Math. 2]

$$E(x) = \left\{ \begin{array}{ll} 1, & \sum_t F_t(x) < F_{th} \\ 0, & otherwise \end{array} \right.$$

$$\cdots \quad (2)$$

According to the abnormality detection based on the optical flow as described above, an abnormality related to a sensor that has acquired the image can be detected with high accuracy.

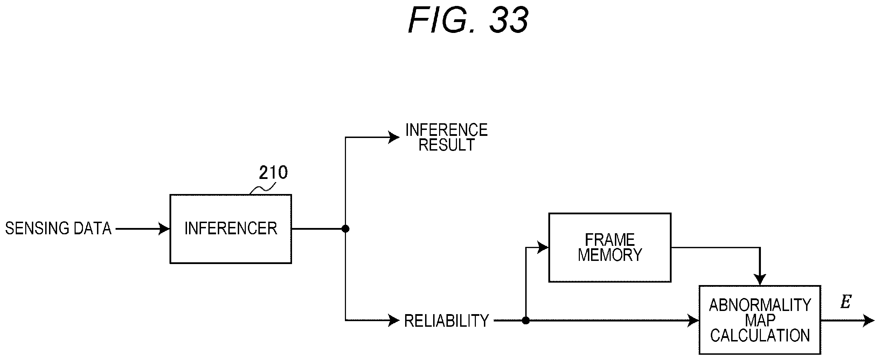

Next, abnormality detection based on reliability of inference according to the present embodiment will be described with reference to Fig. 33. This abnormality detection method is based on prediction that, if there is a region where reliability of inference continues to be low over a plurality of frames, there is a high possibility that an abnormality has occurred in the sensor.

First, the inferencer 210 performs inference on the basis of input sensing data, and outputs an inference result and reliability related to the inference result.

The reliability output by the inferencer 210 is accumulated in a frame memory.

The control unit 150 calculates the abnormality map E(x) on the basis of the accumulated reliability.

For example, in a case where an optical flow at a time t is Ct(x) and a threshold for abnormality determination is $C_{th}$, the control unit 150 calculates the abnormality map E(x) using the following Formula (3).

[Math. 3]

$$E(x) = \begin{cases} 1, & \sum_t C_t(x) < C_{th} \\ 0, & otherwise \end{cases}$$

$$\cdots \quad (3)$$

According to the abnormality detection based on reliability as described above, an abnormality related to a sensor that has acquired sensing data can be detected with high accuracy.

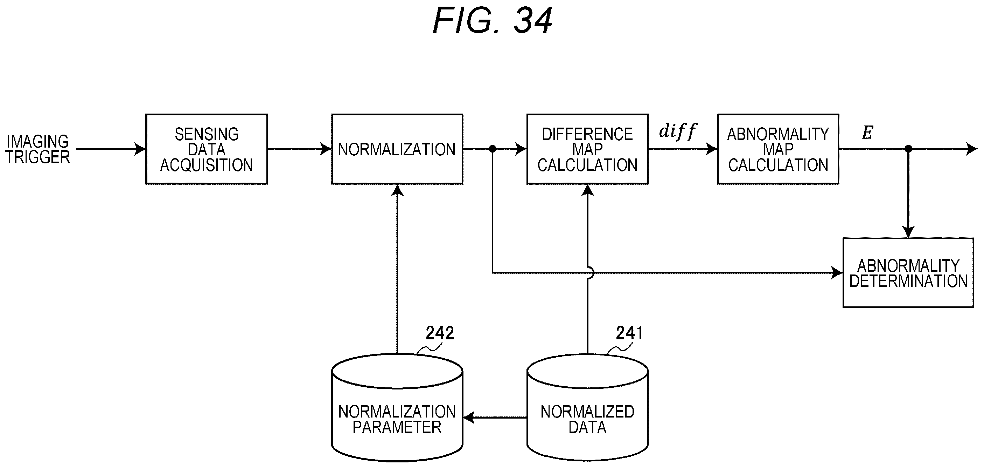

Next, abnormality detection based on comparison of sensing data accumulated in a steady place according to the present embodiment will be described with reference to Fig. 34.

This abnormality detection method is based on, for example, prediction that sensing data accumulated in a steady place such as a parking lot at home or a workplace has a little change in a long period of time.

First, in a case where a mobile body on which the information processing device 10 is mounted parks at a predetermined place such as a parking lot at home or a workplace, an imaging trigger is issued when a user gives a notification to the system or the control unit 150 detects the parking at the predetermined place.

The control unit 150 normalizes sensing data acquired on the basis of the imaging trigger by using a normalization parameter 242. At this time, the control unit 150 may perform normalization using a min-max method, a statistical method such as Z-score normalization, or AI.

Next, the control unit 150 calculates a difference map diff from the normalized sensing data and normalized data 241 accumulated in the past. The control unit 150 may calculate the difference map diff for each pixel using SAD, ZNCC, or AI-based matching.

Subsequently, the control unit 150 calculates an abnormality map E on the basis of the calculated difference map diff.

For example, in a case where a parameter upper limit of a difference is $diff_{max}$, the control unit 150 calculates the abnormality map E using the following Formula (4).

[Math. 4]

$$E = \frac{\min(diff, diff_{max})}{diff_{max}}$$

$$\cdots \quad (4)$$

Next, the control unit 150 performs abnormality determination based on the calculated abnormality map E and the normalized sensing data.

In a case where all the pixels of the abnormality map E are equal to or less than a threshold, the control unit 150 may determine that there is no abnormality, and add the normalized sensing data to the normalized data 241.

According to the abnormality detection based on comparison of sensing data accumulated in the steady place as described above, an abnormality related to a sensor that has acquired sensing data can be detected with high accuracy.

The abnormality detection based on an image feature quantity in a time direction according to the present embodiment has been described above.

Whereas, the abnormality detection model 220 according to the present embodiment can also detect an abnormality on the basis of an image feature quantity in a spatial direction.

For example, the abnormality detection model 220 according to the present embodiment may detect an abnormality related to a sensor that has acquired an image on the basis of a focusing position of the image.

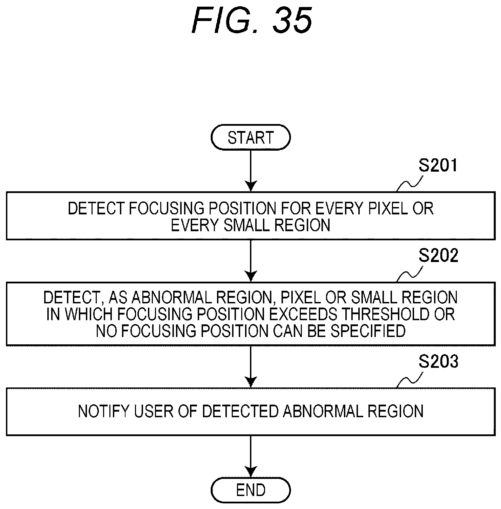

Fig. 35 is a flowchart illustrating an example of a flow of abnormality detection based on a focusing position according to the present embodiment. An example illustrated in Fig. 35 is based on prediction that there is a high possibility that an abnormality such as contamination occurs in a sensor if a focusing position in the image is extremely near.

In a case of the example illustrated in Fig. 35, the control unit 150 first detects a focusing position for every pixel or every small region including a plurality of pixels (step S201). At this time, the control unit 150 may detect the focusing position in all the pixels or the small regions, or may select some pixels or some small regions distributed discretely, to detect the focusing position.

Next, the control unit 150 detects, as an abnormal region, a pixel or a small region in which a focusing position exceeding a certain threshold has been detected or a focusing position has been unable to be specified (S202).

Subsequently, the control unit 150 notifies the user of the detected abnormal region (S203).

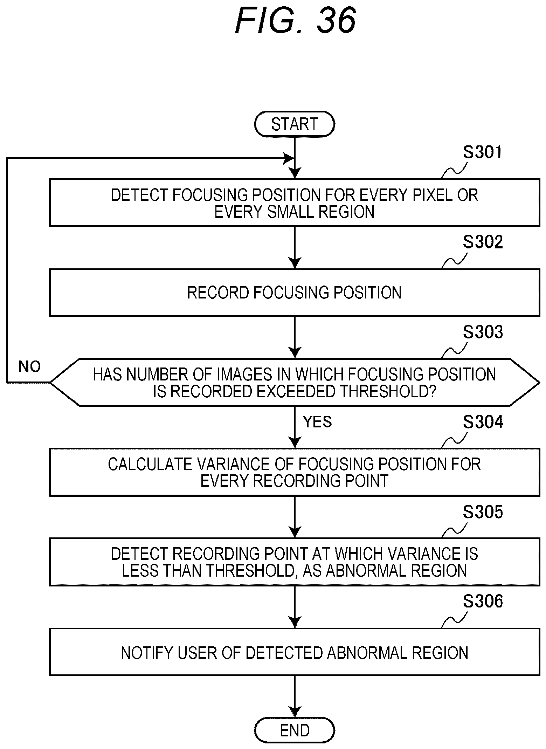

Fig. 36 is a flowchart illustrating another example of a flow of abnormality detection based on a focusing position according to the present embodiment. An example illustrated in Fig. 36 is based on prediction that there is a high possibility that an abnormality such as contamination occurs in a sensor if a focusing position does not change in a plurality of images having different scenes.

In a case of the example illustrated in Fig. 36, first, the control unit 150 detects a focusing position for every pixel or every small region including a plurality of pixels (S301), and records the detected focusing position (S302).

The control unit 150 repeats steps S301 and S302 until the number of images in which the focusing position is recorded exceeds a threshold (YES in step S303).

When the number of images in which the focusing position is recorded exceeds the threshold (S303: YES), the control unit 150 calculates variance of the focusing position for every recording point (a pixel or a small region) (S304).

Next, the control unit 150 detects a recording point at which the variance is less than a threshold, as an abnormal region (S305).

Furthermore, the control unit 150 notifies the user of the detected abnormal region (S306).

The abnormality detection based on the focusing position has been described above. Note that a start timing of the processing may be any timing, as long as the sensor can specify the focusing position at a high speed, such as an algorithm that looks at an image plane phase difference. Whereas, in a case of specifying the focusing position by using an algorithm that takes time for processing, such as an algorithm for specifying the focusing position by looking at contrast or the like, it is desirable that the scene be stationary and the vehicle body be also stopped. Therefore, in this case, it is desirable to start the processing at a timing of after parking, a timing of waiting for a traffic light, or the like.

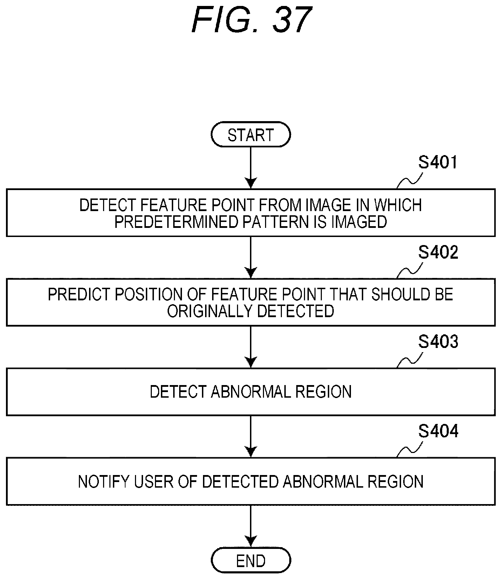

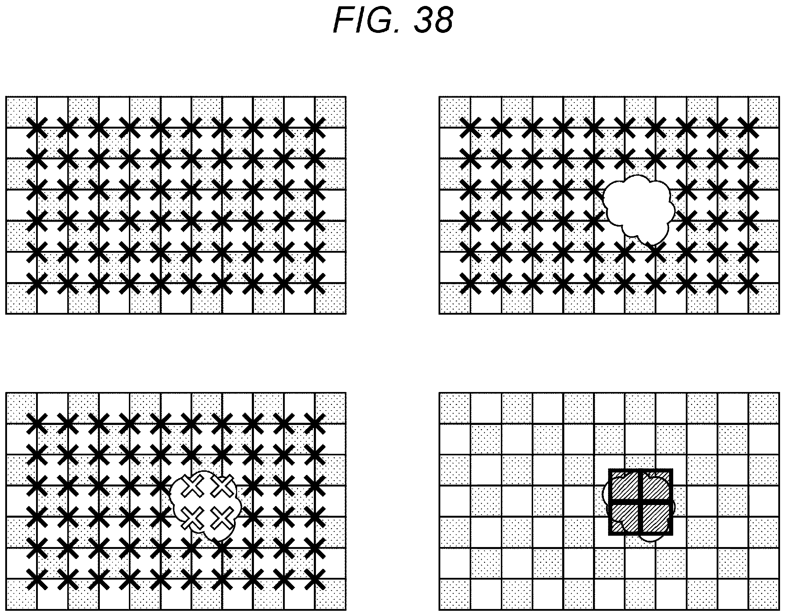

Next, abnormality detection using a predetermined pattern according to the present embodiment will be described with reference to Figs. 37 and 38. In this detection method, a predetermined pattern is printed on a storage position or a cover of the sensors, and abnormality detection is performed on the basis of a feature point detected from an image obtained by imaging the predetermined pattern.

The predetermined pattern may be, for example, a pattern that facilitates detection of the feature point, such as a lattice pattern or a polka-dotted pattern, or may be a complex pattern such as a QR code (registered trademark).

Fig. 37 is a flowchart illustrating an example of a flow of abnormality detection using a predetermined pattern according to the present embodiment.

In a case of the example illustrated in Fig. 37, the control unit 150 first detects a feature point from an image in which the predetermined pattern is imaged (S401).

Fig. 38 is a diagram illustrating an example of feature points detected from an image obtained by imaging a predetermined pattern.

An upper left side of Fig. 38 illustrates an example of feature points (indicated by a black cross mark) detected in a case where there is no abnormal region in a sensor, and an upper right side illustrates an example of feature points detected in a case where there is an abnormal region in the sensor.

Next, the control unit 150 predicts a position of a feature point that should be originally detected (S402). The control unit 150 may predict feature points that should be originally detected, by using information about a predetermined pattern, linearity, or the like.

In a lower left side of Fig. 38, an example of the predicted feature point that should be originally detected is indicated by a white cross mark.

Next, the control unit 150 specifies an abnormal region on the basis of a position of the detected feature point (detected position) and the predicted position of the feature point that should be originally detected (predicted position) (S403).

For example, if the detected position and the predicted position are separated from each other by a threshold or more, the control unit 150 determines that there is an abnormality in the predicted position. The control unit 150 may mask a square region with one side of $\sigma$ pixels centered on the predicted position determined to be abnormal, or may mask the region with a circle having a radius of r pixels. Alternatively, the control unit 150 may divide the image into a plurality of grid-shaped regions, and a divided region may be masked as an abnormal region if there is the predicted position in the divided region.

A lower right side of Fig. 38 illustrates an example of an image in which the abnormal region is masked.

The control unit 150 notifies the user of the detected abnormal region (S404).

The abnormality detection based on an image feature quantity in a spatial direction according to the present embodiment has been described above. According to the abnormality detection as described above, it is possible to detect an abnormality related to a sensor that has acquired sensing data with high accuracy.

Next, abnormality detection based on contrast learning according to the present embodiment will be described.

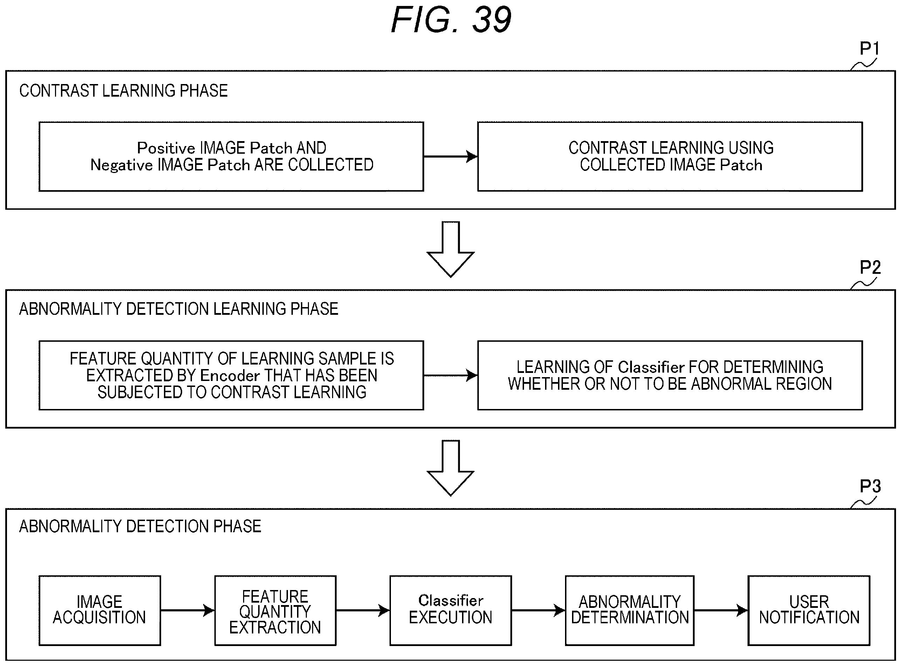

Fig. 39 is a diagram for explaining a flow of contrast learning according to the present embodiment.

As illustrated in Fig. 39, the abnormality detection based on contrast learning according to the present embodiment is roughly divided into a contrast learning phase P1, an abnormality detection learning phase P2, and an abnormality detection phase P3.

In the contrast learning phase P1, after collection of a positive image patch and a negative image patch, contrast learning using the collected image patches is performed.

The positive image patch is a patch of an image acquired by a normal sensor, and the negative image patch is a patch of an image acquired when an abnormality occurs in the sensor. Note that a positive image may be cut out from a negative image.

In the abnormality detection learning phase P2, processing of extracting a feature quantity of a learning sample by an encoder that has been subjected to the contrast learning is performed, and processing of learning a classifier for determining whether or not the region is an abnormal region on the basis of the extracted feature quantity is performed.

In the subsequent abnormality detection phase P3, image acquisition, feature quantity extraction using the encoder that has been subjected to the contrast learning, execution of the classifier that has been subjected to abnormality detection learning, abnormality determination based on an execution result of the classifier, and notification based on an abnormality determination result are performed.

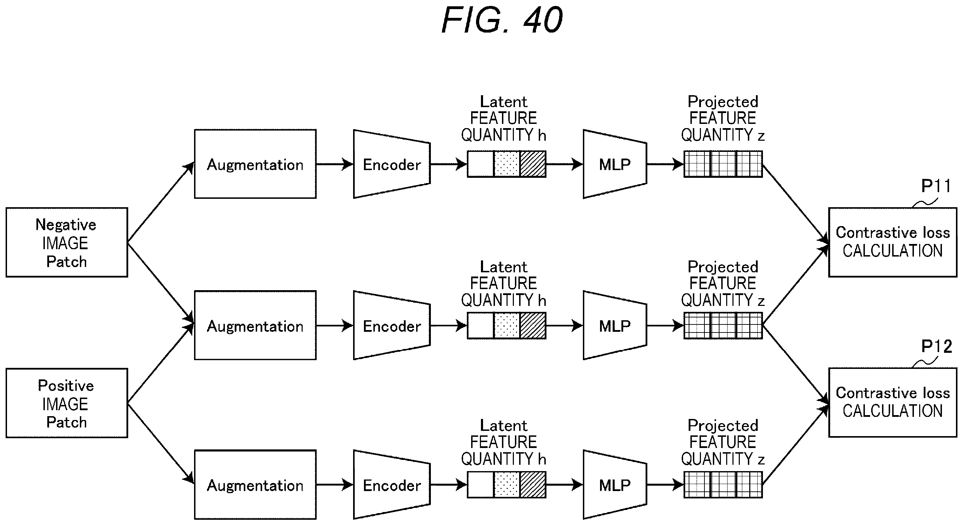

Fig. 40 is a diagram for explaining contrastive loss calculation in the contrast learning phase P1 according to the present embodiment.

As illustrated in Fig. 40, augmentation is applied to the positive image patch and the negative image patch. Examples of the augmentation method include color jitter, crop, blurring, rotation, random erasing, and the like.

Thereafter, each image is input to the encoder, and a latent feature quantity h is acquired. Furthermore, the latent feature quantity h is input to the MLP, and a projected feature quantity z is acquired.

Next, on the basis of the acquired projected feature quantity z, contrastive loss calculation P11 and P12 using the following Formula (5) are performed.

[Math. 5]

$$loss_{i,j} = -log \frac{\exp\left(sim(z_i, z_j)/\tau\right)}{\sum_{k=1}^{2N} \exp\left(sim(z_i, z_k)/\tau\right)}$$

$$\cdot\ \cdot\ \cdot\ (5)$$

$Z_i$ and $Z_j$ in Formula (5) represent projected feature quantities from augmentation images of the positive image patch. Furthermore, $Z_k$ in Formula (5) represents a projected feature quantity from an augmentation image of the negative image patch ($k \neq i$). That is, $Z_i$ and $Z_j$ represent a positive pair, and $Z_i$ and $Z_k$ represent a negative pair.

Furthermore, N in Formula (5) represents a batch size, and Sim represents a cosine value (larger if similar, and smaller if different) of the feature quantity.

In the contrast learning according to the present embodiment, learning is performed such that feature quantities of the positive image patch are close to each other on the basis of a contrastive loss obtained by the contrastive loss calculation P11. Furthermore, learning is performed such that feature quantity is different between the positive image patch and the negative image patch on the basis of a contrastive loss obtained by the contrastive loss calculation P12.

The abnormality detection based on contrast learning according to the present embodiment has been described above.

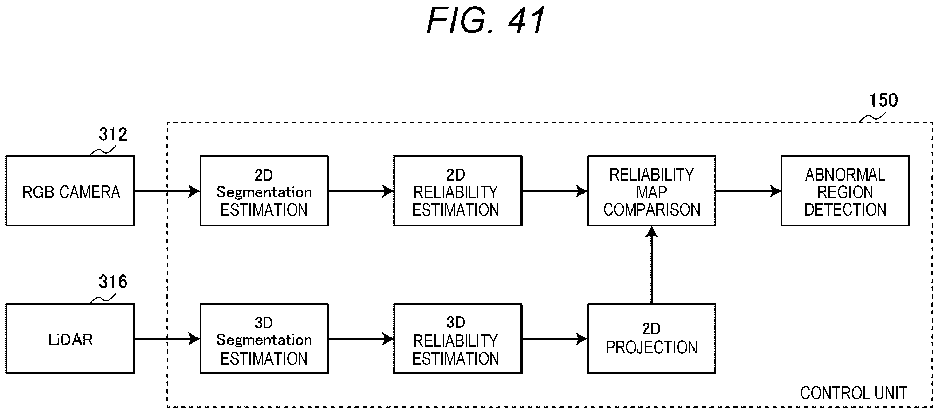

Next, abnormality detection based on reliability comparison regarding a plurality of sensors will be described with reference to Fig. 41. This abnormality detection method compares reliability of an estimation result based on each of a plurality of sensors, and determines a region where the reliability deviates to be abnormal.

In a case of the example illustrated in Fig. 41, the control unit 150 performs 2D segmentation estimation based on an image acquired by the RGB camera 312 and reliability estimation of 2D segmentation estimation.

Furthermore, the control unit 150 performs 3D segmentation estimation and reliability estimation of 3D segmentation estimation, on the basis of the point cloud data acquired by the LiDAR 316.

Next, the control unit 150 projects a result of the reliability estimation of the 3D segmentation estimation to 2D, and compares reliability maps.

In a case where a region where the reliability deviates is recognized in the comparison of the reliability maps, the control unit 150 detects the region as an abnormal region.

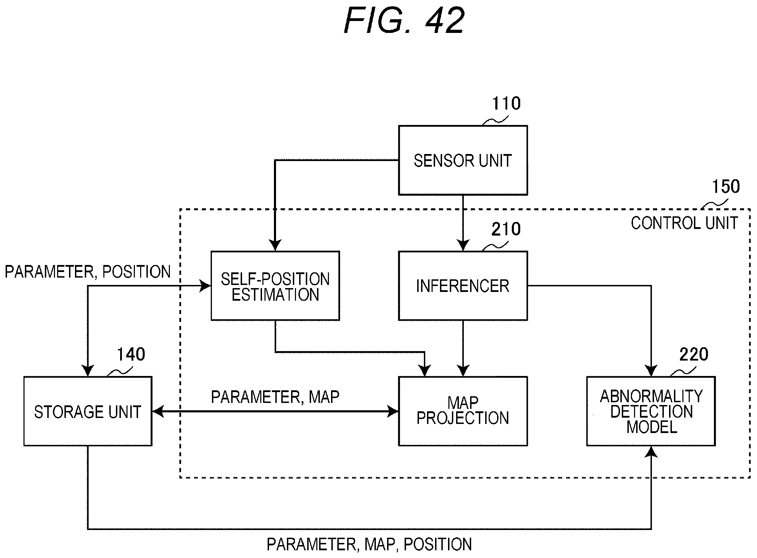

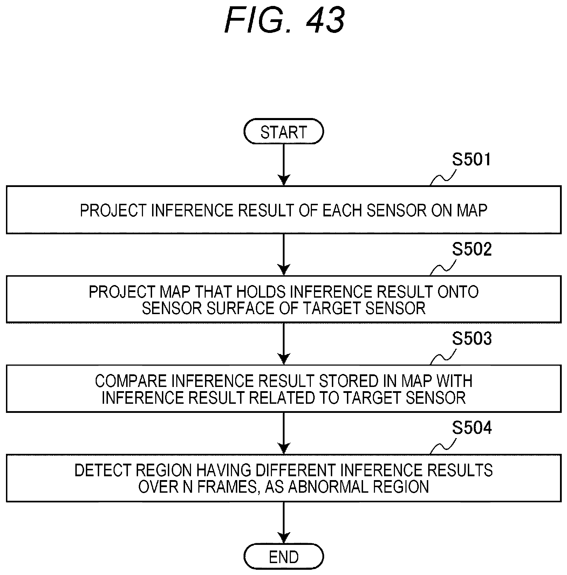

Next, abnormality detection based on comparison of inference results derived individually from a plurality of sensors according to the present embodiment will be described with reference to Figs. 42 and 43.

Fig. 42 is a diagram for explaining a configuration that implements abnormality detection based on integration of inference results derived individually from a plurality of sensors according to the present embodiment. Furthermore, Fig. 43 is a flowchart illustrating an example of a flow of abnormality detection based on integration of inference results derived individually from a plurality of sensors according to the present embodiment.

The inferencer 210 performs inference a plurality of times on the basis of individual pieces of sensing data acquired by individual sensors included in the sensor unit 110.

For example, the inferencer 210 may perform semantic segmentation on the basis of sensing data acquired by a certain sensor, and may perform instance segmentation on the basis of sensing data acquired by another sensor.

The control unit 150 projects a result of the semantic segmentation, a result of the instance segmentation, and the like on a map on the basis of a plurality of inference results by the inferencer 210 and a result of self-position estimation (S501).

At this time, the control unit 150 may integrate the inference results projected onto the map, and accumulate and average the inference results derived individually from the plurality of sensors.

Furthermore, the control unit 150 may arrange a line-of-sight on a sphere centered on a target, or may divide the line-of-sight on a cylinder. In a case where the information processing device 10 is mounted on a mobile body, it is assumed that a direction of the line-of-sight to be obtained is on a plane. Even if the line-of-sight direction is limited, an influence on the result is slight, and efficiency of a memory and processing is improved by adopting the cylinder type.

Furthermore, the control unit 150 may integrate results of all viewpoints of one sensor, or may integrate results of a plurality of sensors. For example, the control unit 150 may integrate the results of the semantic segmentation and the like for each line-of-sight for each sensor, and may integrate the results for each sensor and each line-of-sight when determining results of the semantic segmentation and the like of the map. Furthermore, the map may be a point cloud, an occupancy map, or a mesh.

The abnormality detection model 220 projects the map that holds the inference result as described above, onto a sensor surface of the target sensor (S502).

Next, the abnormality detection model 220 compares the inference result stored in the map with the inference result related to the target sensor (S503).

The abnormality detection model 220 detects a region having different inference results over N frames, as an abnormal region (S504).

<<1.5. Notification control>>

Next, notification control according to the present embodiment will be described. The control unit 150 according to the present embodiment performs various types of notification control related to a sensor abnormality. Hereinafter, notification control in a case where the information processing device 10 is mounted on a mobile body such as a vehicle will be described with a specific example.

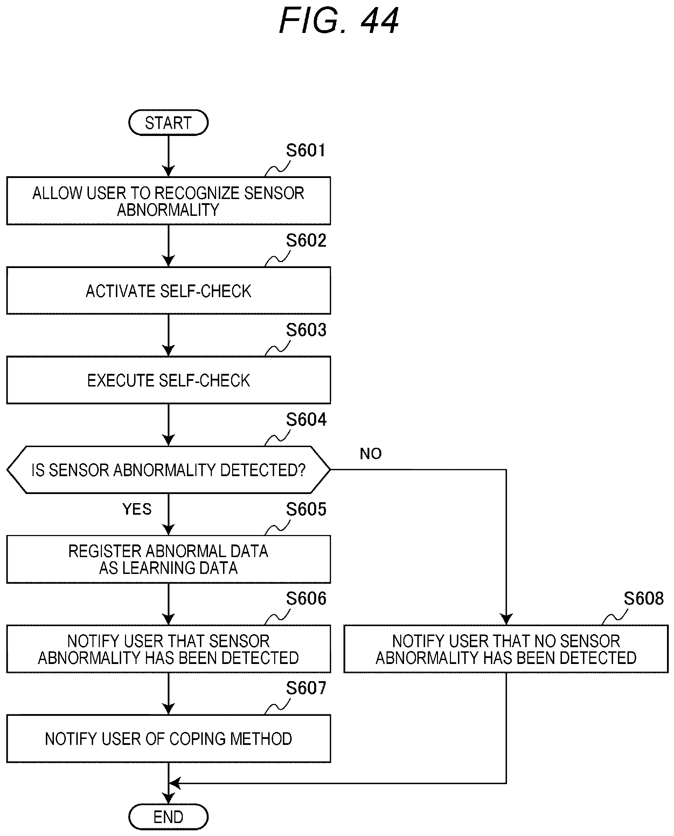

Fig. 44 is a flowchart illustrating an example of a flow of notification control based on a self-check result according to the present embodiment.

In a case of the example illustrated in Fig. 44, first, the user recognizes a sensor abnormality (S601).

The user who has recognized the sensor abnormality activates self-check by, for example, a voice input, a touch panel operation, or the like (S602).

The self-check described above is processing of determining whether or not a sensor abnormality has occurred, and the above-described various abnormality detection methods can be applied to the determination.

Next, the control unit 150 executes the self-check (S603).

Note that the activation is not limited to the activation by the user, and the control unit 150 may perform the self-check periodically or on the basis of a trigger of some kind.

In a case where no sensor abnormality is detected in the self-check (S604: NO), the control unit 150 notifies the user that no sensor abnormality has been detected (S608), and ends the series of processing.

Whereas, if a sensor abnormality is detected in the self-check (S604: YES), the control unit 150 registers, as the learning data 141, sensing data (referred to as abnormality data) acquired by the sensor in which the abnormality is detected (S605).

In a case where the learning data 141 is used in common by a plurality of the information processing devices 10, the control unit 150 may transmit the abnormality data to a server or the like that stores and manages the learning data 141.

Next, the control unit 150 notifies the user that the sensor abnormality has been detected (S606).

Furthermore, the control unit 150 notifies the user of a coping method for the sensor abnormality (S607).

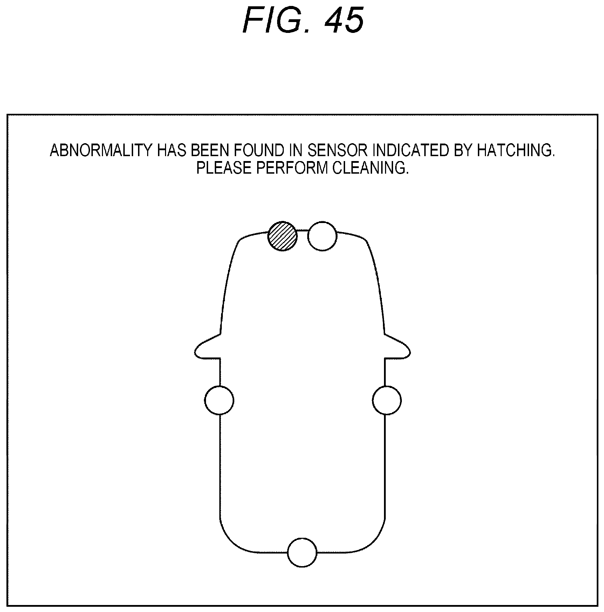

Fig. 45 is a diagram illustrating a notification example of a coping method and the like according to the present embodiment.

As illustrated in Fig. 45, the control unit 150 controls the output unit 130 such that the user is notified of the fact that an abnormality has been detected in a certain sensor, information for specifying the sensor in which the abnormality has been detected, a coping method such as "please perform cleaning" or "please contact a dealer".

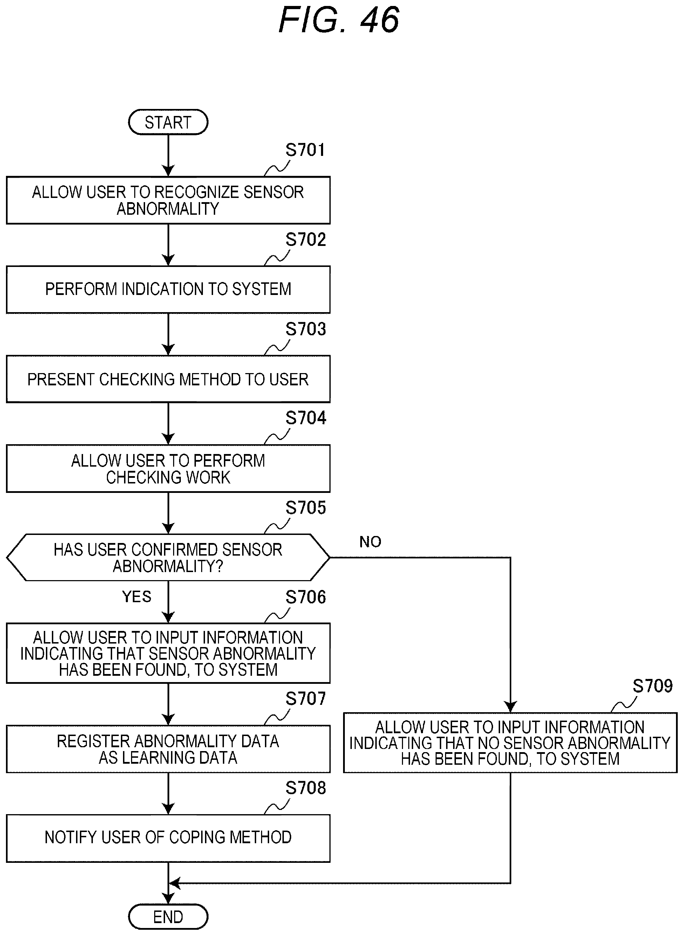

Next, presentation control for a checking method according to the present embodiment will be described. Fig. 46 is a flowchart illustrating an example of a flow of presentation control for the checking method according to the present embodiment.

In a case of the example illustrated in Fig. 46, first, the user recognizes a sensor abnormality (S701).

The user who has recognized the sensor abnormality performs indication of the sensor abnormality to the system by, for example, a voice input, a touch panel operation, or the like (S702).

Based on the indication in step S702, the control unit 150 performs control to present the checking method to the user (S703).

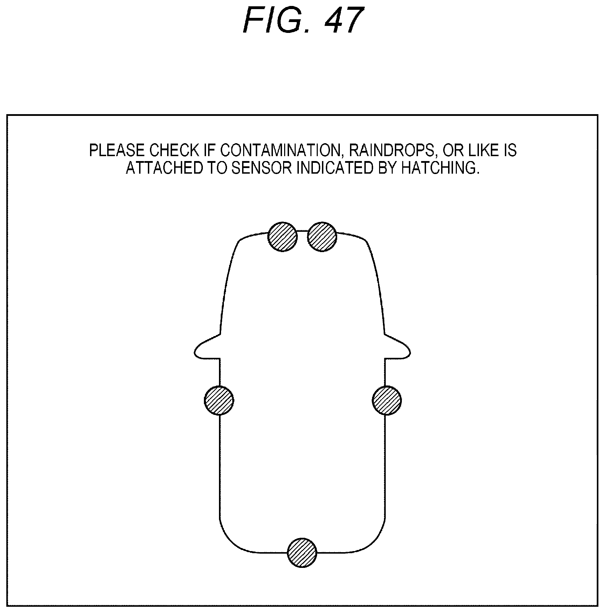

Fig. 47 is a diagram illustrating a presentation example of the checking method according to the present embodiment.

As illustrated in Fig. 47, the control unit 150 controls the output unit 130 to present a method of checking for a sensor abnormality, a method of eliminating a sensor abnormality, and the like to the user.

The user performs checking work on the basis of the presented information (S704).

In a case where no sensor abnormality is found in the checking work (S705: NO), the user inputs information indicating that no sensor abnormality has been found to the system (S709), and the control unit 150 ends the series of processing.

Whereas, if the sensor abnormality is confirmed in the checking work (S705: YES), the user inputs information indicating that the sensor abnormality has been found to the system (S706).

On the basis of the input in step S706, the control unit 150 registers abnormality data as the learning data 141 (S707).

Furthermore, the control unit 150 notifies the user of a coping method for the sensor abnormality (S708).

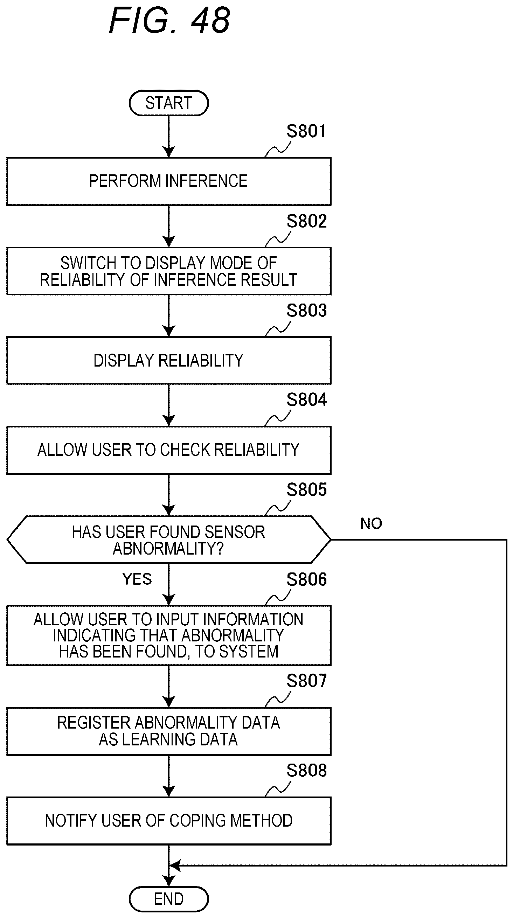

Next, presentation control for reliability of an inference result according to the present embodiment will be described. Fig. 48 is a flowchart illustrating an example of a flow of presentation control for reliability according to the present embodiment.

In a case of the example illustrated in Fig. 48, first, the control unit 150 performs inference processing such as instance segmentation and semantic segmentation using the inferencer 210 (S801).

Next, the control unit 150 performs switching to a display mode of reliability of an inference result (S802). The switching may be performed on the basis of a user's operation.

Next, the control unit 150 performs control to display reliability of the inference result (S803).

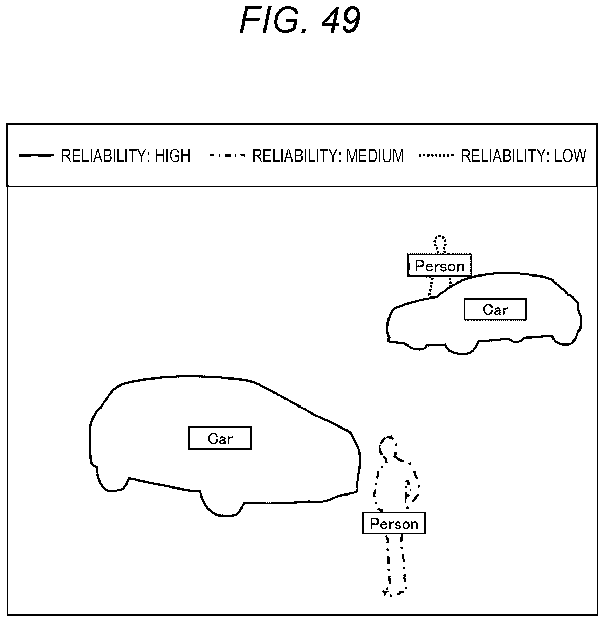

Fig. 49 is a diagram illustrating a display example of reliability of an inference result according to the present embodiment.

In a case of the example illustrated in Fig. 49, by changing a line type of a contour of an instance in accordance with reliability, the reliability for every instance is presented to the user. Without limiting to this example, the control unit 150 may change a color of the contour of the instance in accordance with the reliability.

The user checks the displayed reliability (S804).

In a case where the user does not find any sensor abnormality (S805: NO), the control unit 150 ends a series of processing.

Whereas, if the user finds a sensor abnormality (S805: YES), the user inputs information indicating that an abnormality has been found to the system (S806).

On the basis of the input in step S806, the control unit 150 registers abnormality data as the learning data 141 (S807).

Furthermore, the control unit 150 notifies the user of a coping method for the sensor abnormality (S808).

For example, "if reliability of an instance shown in the lower right of the screen is always low, there is a possibility that there is an abnormality in the front right camera" or the like may be described in a manual so that the user can make determination by looking at the reliability.

The notification control according to the present embodiment has been described above with reference to specific examples. As described above, the control unit 150 may perform the self-check in response to the indication from the user, or may request the user to perform the checking work.

Furthermore, the control unit 150 presents the reliability of the inference result to the user, so that the user can intuitively grasp soundness of the sensor.

Furthermore, when an abnormality is detected, further improvement in robustness of the inferencer can be expected by registering abnormality data as learning data.

<<1.6. Modification>>

Next, a modification according to the present embodiment will be described. Although the case where sensing data includes an image has been mainly described above, the sensing data according to the present embodiment does not necessarily include an image.

For example, a case is assumed in which a plurality of IMUs 318 is worn on the body of the user, and a motion of the user is inferred on the basis of sensing data acquired by the plurality of IMUs 318.

In this case, by masking a part of sensing data acquired by the plurality of IMUs 318 worn on the body of the user and using the sensing data as the learning data 141, it is possible to implement learning in which an abnormality of some of the IMUs 318 is reproduced.

As described above, the number of types of sensors according to the present embodiment is not necessarily plural.

Furthermore, the technical idea according to the present embodiment can also be applied to sound source position estimation by a microphone array including a plurality of microphones, radio wave arrival direction estimation by an array antenna including a plurality of antenna elements, and the like.

By masking a part of sensing data acquired by the plurality of microphones or antenna elements and using the sensing data as the learning data 141, it is possible to implement learning in which an abnormality of some of the microphones or antenna elements is reproduced.

The technical idea according to the present embodiment is widely applicable to various types of inference based on sensing data.

<2. Hardware configuration example>

Next, a hardware configuration example according to an embodiment of the present disclosure will be described.

First, with reference to Fig. 50, a description is given to a hardware configuration example in a case where a mobile body such as a vehicle is mounted with the information processing device 10 that performs inference using the inferencer 210 and sensor abnormality detection using the abnormality detection model 220.

In a case where the information processing device 10 is mounted on a mobile body, as illustrated in Fig. 50, the information processing device 10 may include a sensor group 310, an input device 320, an output device 330, a storage device 340, an electronic control unit (ECU) 350, a navigation 360, and a communication module 370.

(Sensor group 310)

The sensor group 310 may include the RGB camera 312, the radar 314, the LiDAR 316, and the IMU 318.

Furthermore, the sensor group 310 may include the FMCW LiDAR 317 in addition to or instead of the LiDAR 316.

(Input device 320)

The input device 320 includes a touch panel, a microphone used for a voice input, and the like.

(Output device 330)

The output device 330 includes a display, a speaker, and the like.

(Storage device 340)

The storage device 340 includes a hard disk drive (HDD), a solid state drive (SSD), and the like.

(ECU 350)

The ECU 350 operates as the control unit 150. The ECU 350 includes a central processing unit (CPU) 352, a graphics processing unit (GPU) 354, and a memory 356. The memory 356 includes a random access memory (RAM) and a read only memory (ROM).

(Navigation 360)

The navigation 360 includes the GNSS receiver 365 that receives radio waves from the GNSS.

(Communication module 370)

The communication module 370 includes a network interface or the like, and communicates with a computing device on a cloud via the network 50.

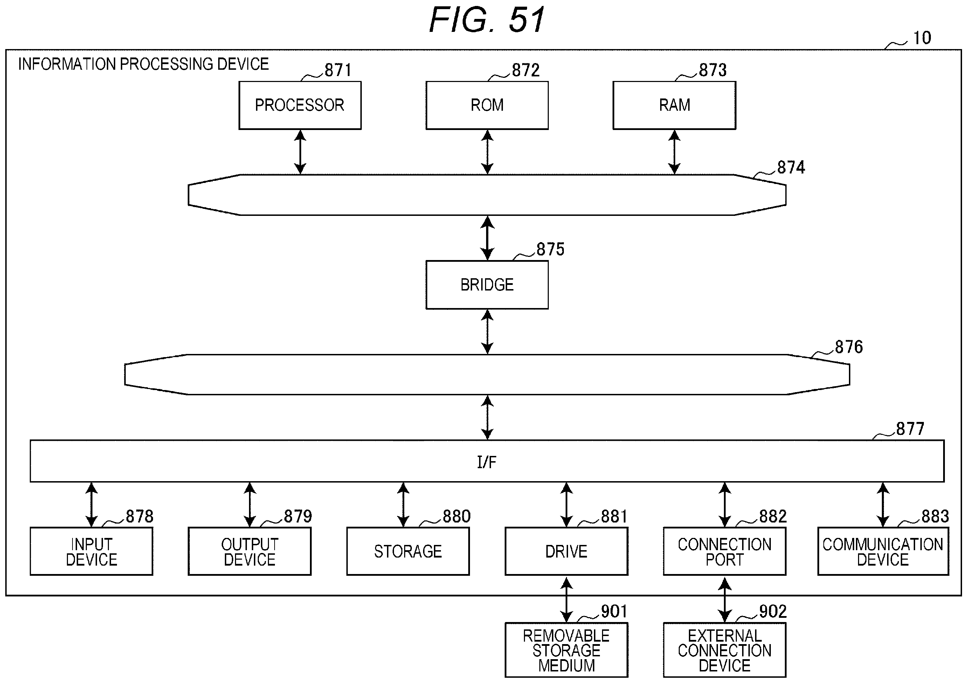

Next, a hardware configuration example of the information processing device 10 that performs generation of the learning data 141, learning using the learning data 141, and the like will be described with reference to Fig. 51.

As illustrated in Fig. 51, the information processing device 10 that performs generation of the learning data 141, learning using the learning data 141, and the like includes, for example, a processor 871, a ROM 872, a RAM 873, a host bus 874, a bridge 875, an external bus 876, an interface 877, an input device 878, an output device 879, a storage 880, a drive 881, a connection port 882, and a communication device 883.

Note that the hardware configuration illustrated here is merely an example, and some of the components may be omitted. Furthermore, the information processing device 10 may further include components other than the components illustrated here.

(Processor 871)

The processor 871 functions as, for example, an arithmetic processing device or a control device, and controls an overall operation of each component or a part thereof on the basis of various programs recorded in the ROM 872, the RAM 873, the storage 880, or a removable storage medium 901. The processor 871 includes a CPU and a GPU.

(ROM 872 and RAM 873)

The ROM 872 is a means for storing programs to be read into the processor 871, data to be used for calculation, and the like. The RAM 873 temporarily or permanently stores, for example, a program to be read into the processor 871, various parameters that appropriately change when the program is executed, and the like.

(Host bus 874, bridge 875, external bus 876, and interface 877)

The processor 871, the ROM 872, and the RAM 873 are mutually connected via, for example, the host bus 874 capable of high-speed data transmission. Meanwhile, the host bus 874 is connected to the external bus 876 having a relatively low data transmission speed via the bridge 875, for example. Furthermore, the external bus 876 is connected to various components via the interface 877.

(Input device 878)

As the input device 878, for example, a mouse, a keyboard, a touch panel, a button, a switch, a lever, or the like is used. Moreover, as the input device 878, a remote controller (hereinafter referred to as a remote) capable of transmitting a control signal using infrared rays or other radio waves may be used. Furthermore, the input device 878 includes a voice input device such as a microphone.

(Output device 879)

The output device 879 is, for example, a device capable of visually or auditorily notifying the user of obtained information, such as a display device such as a liquid crystal display (LCD), an organic electroluminescence (EL), or the like, an audio output device such as a speaker, a headphone, or the like, a printer, a mobile phone, a facsimile, or the like. Furthermore, the output device 879 according to the present disclosure includes various vibration devices capable of outputting a haptic stimulus.

(Storage 880)

The storage 880 is a device for storing various types of data. As the storage 880, for example, a magnetic storage device such as an HDD or the like, a semiconductor storage device, an optical storage device, a magneto-optical storage device, or the like is used.

(Drive 881)

The drive 881 is, for example, a device that reads information recorded in the removable storage medium 901 such as a magnetic disk, an optical disk, a magneto-optical disk, a semiconductor memory or the like, or writes information in the removable storage medium 901.

(Removable storage medium 901)

The removable storage medium 901 is, for example, a digital versatile disc (DVD) medium, a Blu-ray (registered trademark) medium, an HD DVD medium, various semiconductor storage media, or the like. It is needless to say that the removable storage medium 901 may be, for example, an integrated circuit (IC) card on which a noncontact IC chip is mounted, an electronic device, or the like.

(Connection port 882)

The connection port 882 is, for example, a port for connecting an external connection device 902 such as a universal serial bus (USB) port, an IEEE 1394 port, a small computer system interface (SCSI), an RS-232C port, an optical audio terminal, or the like.

(External connection device 902)

The external connection device 902 is, for example, a printer, a portable music player, a digital camera, a digital video camera, an IC recorder, or the like.

(Communication device 883)

The communication device 883 is a communication device for connecting to a network, and is, for example, a wired or wireless local area network (LAN), Bluetooth (registered trademark), a communication card for wireless USB (WUSB), a router for optical communication, a router for asymmetric digital subscriber line (ADSL), a modem for various types of communication, or the like.

<3. Conclusion>

As described above, the information processing device 10 according to an embodiment of the present disclosure includes: an inference unit that performs inference based on input sensing data by using the inferencer 210 generated by learning using masked sensing data as learning data; and the abnormality detection model 220 that detects an abnormality related to a sensor that has acquired sensing data. When the abnormality detection model 220 detects an abnormality in the sensor that has acquired the sensing data, the abnormality detection model 220 masks the sensing data acquired by the sensor and inputs the masked sensing data to the inferencer 210, and the inferencer 210 performs inference on the basis of the masked sensing data input by the abnormality detection model 220. At least a part of the learning data described above is generated using generative AI.

According to the configuration described above, robustness of the inferencer can be improved.

While the preferred embodiment of the present disclosure has been described in detail with reference to the accompanying drawings, the technical scope of the present disclosure is not limited to such examples. It is obvious that those with ordinary skill in the technical field of the present disclosure can conceive of various alterations or corrections within the scope of the technical idea recited in claims, and it is naturally understood that those alterations or corrections also fall within the technical scope of the present disclosure.

Furthermore, each step relating to a process described in the present disclosure is not necessarily processed in time series in the order described in a flowchart or a sequence diagram. For example, individual steps related to the processes of individual devices may be processed in an order different from the described order, or may be processed in parallel.

Furthermore, a series of processing performed by each device described in the present disclosure may be implemented by a program stored in a non-transitory computer-readable storage medium. For example, each program is read into the RAM when the computer executes the program, and is executed by a processor such as a CPU. The storage medium described above is, for example, a magnetic disk, an optical disc, a magneto-optical disk, a flash memory, or the like. Furthermore, the program described above may be distributed via, for example, a network without using a storage medium.

Furthermore, the effects described in the present specification are merely exemplary or illustrative, and are not restrictive. That is, the technology according to the present disclosure can produce other effects that are apparent to those skilled in the art from the description of the present specification, in combination with or instead of the effects described above.

Note that the following configurations also fall within the technological scope of the present disclosure.

(1) An information processing device including:

an inference unit configured to perform inference based on input sensing data, by using an inferencer generated by learning using masked sensing data as learning data; and
an abnormality detection unit configured to detect an abnormality related to a sensor that has acquired sensing data, in which
when the abnormality detection unit detects an abnormality in a sensor that has acquired sensing data, the abnormality detection unit masks the sensing data acquired by the sensor and inputs the sensing data to the inference unit,

the inference unit performs inference on the basis of masked sensing data input by the abnormality detection unit, and

at least a part of the learning data is generated using generative AI.

(2) The information processing device according to (1), in which

the generative AI generates sensing data to be used as the learning data, on the basis of a context that is input.

(3) The information processing device according to (2), in which

the context includes abnormality information related to a sensor.

(4) The information processing device according to (2), in which

the generative AI generates sensing data to be used as the learning data, further on the basis of an input annotation.

(5) The information processing device according to (2), in which

the generative AI generates an image to be used as the learning data, further on the basis of an input image.

(6) The information processing device according to (5), in which

the generative AI generates an image to be used as the learning data, on the basis of an image that is input and a parameter that specifies a movement amount of an object included in the image.

(7) The information processing device according to (3), in which

the context is selected on the basis of a result of inference performed by the inferencer.

(8) The information processing device according to (7), in which

the context is selected on the basis of a difficult scene extracted by analysis of a result of estimation by the inferencer.

(9) The information processing device according to any one of (1) to (8), in which

the abnormality detection unit detects an abnormality related to a sensor that has acquired sensing data, on the basis of variability of the acquired sensing data in a time direction.

(10) The information processing device according to (9), in which

the abnormality detection unit detects an abnormality related to a sensor that has acquired sensing data input to the inferencer, on the basis of variability of reliability of inference performed by the inferencer.

(11) The information processing device according to any one of (1) to (10), in which

the sensing data includes an image.

(12) The information processing device according to (11), in which

the abnormality detection unit detects an abnormality related to a sensor that has acquired the image, on the basis of a difference between frames of the image.

(13) The information processing device according to (11), in which

the abnormality detection unit detects an abnormality related to a sensor that has acquired the image, on the basis of an optical flow of the image.

(14) The information processing device according to (11), in which

the abnormality detection unit detects an abnormality related to a sensor that has acquired the image, on the basis of a feature of the image in a spatial direction.

(15) The information processing device according to (14), in which

the abnormality detection unit detects an abnormality related to a sensor that has acquired the image, on the basis of a focusing position of the image.

(16) The information processing device according to any one of (1) to (8), in which

the abnormality detection unit detects an abnormality related to a sensor that has acquired sensing data, on the basis of contrast learning.

(17) The information processing device according to any one of (1) to (8), in which

the abnormality detection unit detects an abnormality related to a sensor, on the basis of reliability comparison related to a plurality of sensors.

(18) The information processing device according to any one of (1) to (8), in which

the abnormality detection unit detects an abnormality related to a sensor, on the basis of integration of inference results derived individually from a plurality of sensors.

(19) An information processing method

performed by a processor,
the information processing method including:

performing inference based on input sensing data, by using an inferencer generated by learning using masked sensing data as learning data; and
detecting an abnormality related to a sensor that has acquired sensing data, in which
the detecting an abnormality includes, when an abnormality is detected in a sensor that has acquired sensing data, masking the sensing data acquired by the sensor,

the performing inference includes performing inference on the basis of masked sensing data, and

at least a part of the learning data is generated using generative AI.

(20) A non-transitory computer-readable storage medium storing a program causing a computer to function as an information processing device including:

an inference unit configured to perform inference based on input sensing data, by using an inferencer generated by learning using masked sensing data as learning data; and

an abnormality detection unit configured to detect an abnormality related to a sensor that has acquired sensing data, in which

when the abnormality detection unit detects an abnormality in a sensor that has acquired sensing data, the abnormality detection unit masks the sensing data acquired by the sensor and inputs the sensing data to the inference unit,

the inference unit performs inference on the basis of masked sensing data input by the abnormality detection unit, and

at least a part of the learning data is generated using generative AI.

REFERENCE SIGNS LIST

| | |
|---|---|
| 10 | Information processing device |
| 110 | Sensor unit |
| 150 | Control unit |
| 210 | Inferencer |
| 220 | Abnormality detection model |
| 230 | Image generation AI |
| 312 | RGB Camera |
| 314 | Radar |
| 316 | LiDAR |
| 317 | FMCW LiDAR |
| 318 | IMU |
| 141 | Learning data |
| 142 | Annotated image data |
| 143 | Annotation mask data |
| 144 | Context data |
| 145 | Selection context |

**Claims**

1. An information processing device comprising:

an inference unit configured to perform inference based on input sensing data, by using an inferencer generated by learning using masked sensing data as learning data; and

an abnormality detection unit configured to detect an abnormality related to a sensor that has acquired sensing data, wherein

when the abnormality detection unit detects an abnormality in a sensor that has acquired sensing data, the abnormality detection unit masks the sensing data acquired by the sensor and inputs the sensing data to the inference unit,

the inference unit performs inference on a basis of masked sensing data input by the abnormality detection unit, and

at least a part of the learning data is generated using generative AI.

2. The information processing device according to claim 1, wherein the generative AI generates sensing data to be used as the learning data, on a basis of a context that is input.

3. The information processing device according to claim 2, wherein

the context includes abnormality information related to a sensor.

4. The information processing device according to claim 2, wherein
   the generative AI generates sensing data to be used as the learning data, further on a basis of an input annotation.

5. The information processing device according to claim 2, wherein
   the generative AI generates an image to be used as the learning data, further on a basis of an input image.

6. The information processing device according to claim 5, wherein
   the generative AI generates an image to be used as the learning data, on a basis of an image that is input and a parameter that specifies a movement amount of an object included in the image.

7. The information processing device according to claim 3, wherein
   the context is selected on a basis of a result of inference performed by the inferencer.

8. The information processing device according to claim 7, wherein
   the context is selected on a basis of a difficult scene extracted by analysis of a result of estimation by the inferencer.

9. The information processing device according to claim 1, wherein
   the abnormality detection unit detects an abnormality related to a sensor that has acquired sensing data, on a basis of variability of the acquired sensing data in a time direction.

10. The information processing device according to claim 9, wherein
    the abnormality detection unit detects an abnormality related to a sensor that has acquired sensing data input to the inferencer, on a basis of variability of reliability of inference performed by the inferencer.

11. The information processing device according to claim 1, wherein
    the sensing data includes an image.

12. The information processing device according to claim 11, wherein
    the abnormality detection unit detects an abnormality related to a sensor that has acquired the image, on a basis of a difference between frames of the image.

13. The information processing device according to claim 11, wherein
    the abnormality detection unit detects an abnormality related to a sensor that has acquired the image, on a basis of an optical flow of the image.

14. The information processing device according to claim 11, wherein
    the abnormality detection unit detects an abnormality related to a sensor that has acquired the image, on a basis of a feature of the image in a spatial direction.

15. The information processing device according to claim 14, wherein
    the abnormality detection unit detects an abnormality related to a sensor that has acquired the image, on a basis of a focusing position of the image.

16. The information processing device according to claim 1, wherein
    the abnormality detection unit detects an abnormality related to a sensor that has acquired sensing data, on a basis of contrast learning.

17. The information processing device according to claim 1, wherein
    the abnormality detection unit detects an abnormality related to a sensor, on a basis of reliability comparison related to a plurality of sensors.

18. The information processing device according to claim 1, wherein
    the abnormality detection unit detects an abnormality related to a sensor, on a basis of integration of inference results derived individually from a plurality of sensors.

19. An information processing method

performed by a processor,
the information processing method comprising:

performing inference based on input sensing data, by using an inferencer generated by learning using masked sensing data as learning data; and
detecting an abnormality related to a sensor that has acquired sensing data, wherein
the detecting an abnormality includes, when an abnormality is detected in a sensor that has acquired sensing data, masking the sensing data acquired by the sensor,
the performing inference includes performing inference on a basis of masked sensing data, and
at least a part of the learning data is generated using generative AI.

20. A non-transitory computer-readable storage medium storing a program causing a computer to function as an information processing device comprising:

an inference unit configured to perform inference based on input sensing data, by using an inferencer generated by learning using masked sensing data as learning data; and
an abnormality detection unit configured to detect an abnormality related to a sensor that has acquired sensing data, wherein
when the abnormality detection unit detects an abnormality in a sensor that has acquired sensing data, the abnormality detection unit masks the sensing data acquired by the sensor and inputs the sensing data to the inference unit,
the inference unit performs inference on a basis of masked sensing data input by the abnormality detection unit, and
at least a part of the learning data is generated using generative AI.

## FIG. 1

SENSING DATA

MASKING

MASK PARAMETER

INFERENCER
LEARNING

# FIG. 2

# FIG. 3

10

## INFORMATION PROCESSING DEVICE

| 110 | 120 | 130 |
|---|---|---|
| SENSOR UNIT | INPUT UNIT | OUTPUT UNIT |

150

CONTROL UNIT

| 140 | 160 | 170 |
|---|---|---|
| STORAGE UNIT | POSITION INFORMATION ACQUISITION UNIT | COMMUNICATION UNIT |

50

# FIG. 4

LiDAR 316 → Depth CONVERSION → Depth IMAGE FEATURE QUANTITY EXTRACTION → FEATURE QUANTITY Fusion → Segmentation Transformer Decoder → POST-PROCESSING → Instance/Semantic segmentation

Query GENERATION → Segmentation Transformer Decoder

RGB CAMERA 312 → RGB IMAGE FEATURE QUANTITY EXTRACTION → Depth ESTIMATION → BEV Mapping → Depth

CAMERA PARAMETER → Depth ESTIMATION

BEV FEATURE QUANTITY Fusion → BODY DETECTION Decoder → Object box, Velocity

Radar 314 → Radar PRE-PROCESSING → Radar FEATURE QUANTITY EXTRACTION → BEV Mapping → BEV FEATURE QUANTITY Fusion

EP 4 773 073 A1

# FIG. 5

# FIG. 6

## FIG. 7

CAMERA PARAMETER

312

RGB CAMERA

314

Radar

RGB IMAGE FEATURE QUANTITY EXTRACTION

Depth ESTIMATION

CONTEXT FEATURE QUANTITY EXTRACTION

BEV Mapping

BEV FEATURE QUANTITY EXTRACTION

BODY DETECTION Decoder

Object box, Velocity

FIG. 8

ANNOTATION

ANNOTATED
IMAGE DATA  142

IMAGE

IMAGE
GENERATION
AI  230

IMAGE

LEARNING
DATA  141

· WEATHER
CONDITION
· SENSOR
ABNORMALITY
· TIME ZONE  145

CONTEXT
SELECTION

CONTEXT
DATA  144

EP 4 773 073 A1

# FIG. 9

ANNOTATION

142 ANNOTATED IMAGE DATA

IMAGE

230 IMAGE GENERATION AI

IMAGE

141 LEARNING DATA

DEVELOPER → VOICE RECOGNITION

145
· WEATHER CONDITION
· SENSOR ABNORMALITY
· TIME ZONE

CONTEXT SELECTION

144 CONTEXT DATA

EP 4 773 073 A1

*FIG. 10*

EP 4 773 073 A1

FIG. 11

ANNOTATION MASK DATA 143

ANNOTATION

IMAGE GENERATION AI 230

IMAGE

LEARNING DATA 141

DEVELOPER

VOICE RECOGNITION

· WEATHER CONDITION
· SENSOR ABNORMALITY
· TIME ZONE 145

CONTEXT SELECTION

CONTEXT DATA 144

EP 4 773 073 A1

# FIG. 12

OBJECT MOVEMENT AMOUNT
PARAMETER

142

ANNOTATED
IMAGE DATA

IMAGE →

ANNOTATION →

230

IMAGE
GENERATION
AI

IMAGE →

ANNOTATION →

141

LEARNING
DATA

145

· WEATHER
CONDITION
· SENSOR
ABNORMALITY
· TIME ZONE

CONTEXT
SELECTION

144

CONTEXT
DATA

# FIG. 13

# FIG. 14

OBJECT MOVEMENT AMOUNT
PARAMETER

143

ANNOTATION
MASK DATA

ANNOTATION

230

IMAGE
GENERATION
AI

IMAGE

ANNOTATION

141

LEARNING
DATA

145

· WEATHER
CONDITION
· SENSOR
ABNORMALITY
· TIME ZONE

CONTEXT
SELECTION

144

CONTEXT
DATA

EP 4 773 073 A1

# FIG. 15

OBJECT MOVEMENT AMOUNT PARAMETER

ANNOTATION MASK DATA — 143

ANNOTATION →

IMAGE GENERATION AI — 230

IMAGE → LEARNING DATA — 141

ANNOTATION →

DEVELOPER → VOICE RECOGNITION →

· WEATHER CONDITION
· SENSOR ABNORMALITY
· TIME ZONE — 145

CONTEXT SELECTION

CONTEXT DATA — 144

EP 4 773 073 A1

FIG. 16

# FIG. 17

ANNOTATION

142

ANNOTATED IMAGE DATA

IMAGE →

230

IMAGE GENERATION AI

IMAGE →

LEARNING DATA

141

TEST DATA EXTRACTION

INFERENCER LEARNING

145

- WEATHER CONDITION
- SENSOR ABNORMALITY
- TIME ZONE

146

TEST DATA

210

INFERENCER

DEVELOPER →

VOICE RECOGNITION

CONTEXT SELECTION

144

CONTEXT DATA

INFERENCE RESULT ANALYSIS

EP 4 773 073 A1

## FIG. 18

*FIG. 19*

# FIG. 20

INFERENCE RESULT → QUANTITATIVE EVALUATION FOR EACH CONTEXT → VISUALIZATION → DEVELOPER

QUANTITATIVE EVALUATION FOR EACH CONTEXT → DIFFICULT SCENE EXTRACTION → CONTEXT SELECTION

CONTEXT DATA → CONTEXT SELECTION

144

EP 4 773 073 A1

# FIG. 21

SENSOR CLEANING
SIGNAL → CONTROL
UNIT 150

IMAGING
TRIGGER → SENSING DATA
ACQUISITION → LEARNING
DATA 141

CLEANING
TRIGGER → SENSOR
CLEANING

110

EP 4 773 073 A1

# FIG. 22

START

↓ S101

RECEIVE SENSOR CLEANING SIGNAL, BY CONTROL UNIT

↓ S102

ISSUE IMAGING TRIGGER FROM CONTROL UNIT

↓ S103

ACQUIRE SENSING DATA BEFORE CLEANING

↓ S104

REGISTER LEARNING DATA

↓ S105

ISSUE CLEANING TRIGGER FROM CONTROL UNIT

↓ S106

PERFORM SENSOR CLEANING

↓ S107

ISSUE IMAGING TRIGGER FROM CONTROL UNIT

↓ S108

ACQUIRE SENSING DATA AFTER CLEANING

↓ S109

REGISTER LEARNING DATA

↓

END

FIG. 23

# FIG. 24

# FIG. 25

317

## FIG. 26

FMCW LiDAR (317) → MOBILE BODY REGION EXTRACTION

RGB CAMERA (312)

IMU (318)

GNSS RECEIVER (365)

MOBILE BODY REGION EXTRACTION → MOBILE BODY REGION SEGMENTATION

SELF-MOTION ESTIMATION

MOBILE BODY REGION SEGMENTATION → MOBILE BODY REGION MOTION CALCULATION

MOBILE BODY REGION MOTION CALCULATION → PROJECTION ONTO IMAGE

EP 4 773 073 A1

FIG. 27

EP 4 773 073 A1

*FIG. 28*

EP 4 773 073 A1

*FIG. 29*

# FIG. 30

EP 4 773 073 A1

FIG. 31

EP 4 773 073 A1

EP 4 773 073 A1

# FIG. 32

# FIG. 33

# FIG. 34

IMAGING TRIGGER → SENSING DATA ACQUISITION → NORMALIZATION → DIFFERENCE MAP CALCULATION → $diff$ → ABNORMALITY MAP CALCULATION → $E$ → ABNORMALITY DETERMINATION

242 NORMALIZATION PARAMETER

241 NORMALIZED DATA

EP 4 773 073 A1

# FIG. 35

```
         ( START )
              |
              v                                    S201
+------------------------------------------------+
|    DETECT FOCUSING POSITION FOR EVERY PIXEL OR |
|             EVERY SMALL REGION                 |
+------------------------------------------------+
              |
              v                                    S202
+------------------------------------------------+
| DETECT, AS ABNORMAL REGION, PIXEL OR SMALL REGION|
| IN WHICH FOCUSING POSITION EXCEEDS THRESHOLD OR |
|     NO FOCUSING POSITION CAN BE SPECIFIED       |
+------------------------------------------------+
              |
              v                                    S203
+------------------------------------------------+
|    NOTIFY USER OF DETECTED ABNORMAL REGION      |
+------------------------------------------------+
              |
              v
          ( END )
```

# FIG. 36

```
                          ( START )
                              │
         ┌────────────────────┤                        S301
         │                    ▼                         ∽
         │     ┌─────────────────────────────────────────┐
         │     │  DETECT FOCUSING POSITION FOR EVERY PIXEL OR │
         │     │          EVERY SMALL REGION              │
         │     └─────────────────────────────────────────┘
         │                    │                         S302
         │                    ▼                          ∽
         │     ┌─────────────────────────────────────────┐
         │     │        RECORD FOCUSING POSITION          │
         │     └─────────────────────────────────────────┘
         │                    │                         S303
         │  NO                ▼                          ∽
         └──< HAS NUMBER OF IMAGES IN WHICH FOCUSING POSITION >
              \  IS RECORDED EXCEEDED THRESHOLD?          /
                              │ YES                      S304
                              ▼                           ∽
               ┌─────────────────────────────────────────┐
               │  CALCULATE VARIANCE OF FOCUSING POSITION FOR │
               │          EVERY RECORDING POINT           │
               └─────────────────────────────────────────┘
                              │                         S305
                              ▼                          ∽
               ┌─────────────────────────────────────────┐
               │  DETECT RECORDING POINT AT WHICH VARIANCE IS │
               │   LESS THAN THRESHOLD, AS ABNORMAL REGION │
               └─────────────────────────────────────────┘
                              │                         S306
                              ▼                          ∽
               ┌─────────────────────────────────────────┐
               │   NOTIFY USER OF DETECTED ABNORMAL REGION │
               └─────────────────────────────────────────┘
                              │
                              ▼
                          ( END )
```

# FIG. 37

```
                    ( START )

                                              S401
   ┌─────────────────────────────────────────┐
   │  DETECT FEATURE POINT FROM IMAGE IN WHICH │
   │    PREDETERMINED PATTERN IS IMAGED        │
   └─────────────────────────────────────────┘

                                              S402
   ┌─────────────────────────────────────────┐
   │ PREDICT POSITION OF FEATURE POINT THAT SHOULD BE │
   │          ORIGINALLY DETECTED              │
   └─────────────────────────────────────────┘

                                              S403
   ┌─────────────────────────────────────────┐
   │          DETECT ABNORMAL REGION           │
   └─────────────────────────────────────────┘

                                              S404
   ┌─────────────────────────────────────────┐
   │   NOTIFY USER OF DETECTED ABNORMAL REGION │
   └─────────────────────────────────────────┘

                    (  END  )
```

FIG. 38

*FIG. 39*

EP 4 773 073 A1

P1

CONTRAST LEARNING PHASE

Positive IMAGE Patch AND
Negative IMAGE Patch ARE COLLECTED → CONTRAST LEARNING USING
COLLECTED IMAGE Patch

P2

ABNORMALITY DETECTION LEARNING PHASE

FEATURE QUANTITY OF LEARNING SAMPLE IS
EXTRACTED BY Encoder THAT HAS BEEN
SUBJECTED TO CONTRAST LEARNING → LEARNING OF Classifier FOR DETERMINING
WHETHER OR NOT TO BE ABNORMAL REGION

P3

ABNORMALITY DETECTION PHASE

IMAGE
ACQUISITION → FEATURE
QUANTITY
EXTRACTION → Classifier
EXECUTION → ABNORMALITY
DETERMINATION → USER
NOTIFICATION

## FIG. 40

## FIG. 41

## FIG. 42

EP 4 773 073 A1

# FIG. 43

```
               ( START )
                    │
                    │              S501
                    ▼          ╭~
┌───────────────────────────────────────────────┐
│   PROJECT INFERENCE RESULT OF EACH SENSOR ON MAP   │
└───────────────────────────────────────────────┘
                    │              S502
                    ▼          ╭~
┌───────────────────────────────────────────────┐
│    PROJECT MAP THAT HOLDS INFERENCE RESULT ONTO    │
│       SENSOR SURFACE OF TARGET SENSOR              │
└───────────────────────────────────────────────┘
                    │              S503
                    ▼          ╭~
┌───────────────────────────────────────────────┐
│    COMPARE INFERENCE RESULT STORED IN MAP WITH     │
│    INFERENCE RESULT RELATED TO TARGET SENSOR       │
└───────────────────────────────────────────────┘
                    │              S504
                    ▼          ╭~
┌───────────────────────────────────────────────┐
│  DETECT REGION HAVING DIFFERENT INFERENCE RESULTS  │
│       OVER N FRAMES, AS ABNORMAL REGION            │
└───────────────────────────────────────────────┘
                    │
                    ▼
                ( END )
```

# FIG. 44

START

**S601**
ALLOW USER TO RECOGNIZE SENSOR ABNORMALITY

**S602**
ACTIVATE SELF-CHECK

**S603**
EXECUTE SELF-CHECK

**S604**
IS SENSOR ABNORMALITY DETECTED? — NO

YES **S605**
REGISTER ABNORMAL DATA AS LEARNING DATA

**S606**
NOTIFY USER THAT SENSOR ABNORMALITY HAS BEEN DETECTED

**S608**
NOTIFY USER THAT NO SENSOR ABNORMALITY HAS BEEN DETECTED

**S607**
NOTIFY USER OF COPING METHOD

END

# FIG. 45

ABNORMALITY HAS BEEN FOUND IN SENSOR INDICATED BY HATCHING.
PLEASE PERFORM CLEANING.

# FIG. 46

```
                    ( START )
                        │
                        ▼           S701
        ┌───────────────────────────────┐
        │  ALLOW USER TO RECOGNIZE SENSOR │
        │           ABNORMALITY          │
        └───────────────────────────────┘
                        │           S702
                        ▼
        ┌───────────────────────────────┐
        │    PERFORM INDICATION TO SYSTEM │
        └───────────────────────────────┘
                        │           S703
                        ▼
        ┌───────────────────────────────┐
        │  PRESENT CHECKING METHOD TO USER│
        └───────────────────────────────┘
                        │           S704
                        ▼
        ┌───────────────────────────────┐
        │     ALLOW USER TO PERFORM       │
        │        CHECKING WORK            │
        └───────────────────────────────┘
                        │           S705
                        ▼
        ╱───────────────────────────────╲        NO
        ⟨   HAS USER CONFIRMED SENSOR      ⟩──────────┐
        ╲        ABNORMALITY?            ╱            │
             YES │           S706                     │
                 ▼                                    │
        ┌───────────────────────────────┐            │
        │ ALLOW USER TO INPUT INFORMATION │            │
        │ INDICATING THAT SENSOR ABNORMALITY           │
        │ HAS BEEN FOUND, TO SYSTEM       │            │   S709
                 │           S707                      ▼
                 ▼                          ┌─────────────────────────────────┐
        ┌───────────────────────────────┐  │ ALLOW USER TO INPUT INFORMATION  │
        │    REGISTER ABNORMALITY DATA    │  │ INDICATING THAT NO SENSOR ABNORMALITY
        │      AS LEARNING DATA           │  │ HAS BEEN FOUND, TO SYSTEM        │
        └───────────────────────────────┘  └─────────────────────────────────┘
                 │           S708                      │
                 ▼                                     │
        ┌───────────────────────────────┐             │
        │  NOTIFY USER OF COPING METHOD   │            │
        └───────────────────────────────┘             │
                        │                              │
                        ▼◄─────────────────────────────┘
                     ( END )
```

# FIG. 47

PLEASE CHECK IF CONTAMINATION, RAINDROPS, OR LIKE IS
ATTACHED TO SENSOR INDICATED BY HATCHING.

# FIG. 48

START

S801

PERFORM INFERENCE

S802

SWITCH TO DISPLAY MODE OF
RELIABILITY OF INFERENCE RESULT

S803

DISPLAY RELIABILITY

S804

ALLOW USER TO CHECK RELIABILITY

S805

HAS USER FOUND SENSOR
ABNORMALITY?                           NO

YES                    S806

ALLOW USER TO INPUT INFORMATION
INDICATING THAT ABNORMALITY
HAS BEEN FOUND, TO SYSTEM

S807

REGISTER ABNORMALITY DATA
AS LEARNING DATA

S808

NOTIFY USER OF COPING METHOD

END

# FIG. 49

# FIG. 50

EP 4 773 073 A1

# FIG. 51

## INTERNATIONAL SEARCH REPORT

| International application No. |
| --- |
| **PCT/JP2023/042375** |

| A. | CLASSIFICATION OF SUBJECT MATTER |
| --- | --- |

***G06T 7/00***(2017.01)i
FI:  G06T7/00 350B

According to International Patent Classification (IPC) or to both national classification and IPC

| B. | FIELDS SEARCHED |
| --- | --- |

Minimum documentation searched (classification system followed by classification symbols)

G06T7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2023-99912 A (REGULUS CO., LTD.) 14 July 2023 (2023-07-14) paragraphs [0075]-[0083], fig. 9-10 | 1-20 |
| A | JP 2023-510162 A (ZOOX, INC.) 13 March 2023 (2023-03-13) paragraphs [0081]-[0084], fig. 7 | 1-20 |
| A | JP 2017-92622 A (CLARION CO. LTD.) 25 May 2017 (2017-05-25) paragraphs [0027]-[0032], fig. 3 | 1-20 |
| A | JP 6616906 B1 (MITSUBISHI ELECTRIC BUILDING TECHNO-SERVICE CO., LTD.) 04 December 2019 (2019-12-04) paragraphs [0034]-[0045], fig. 3 | 1-20 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 January 2024** | **30 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2023/042375**

| Patent document cited in search report | | | Publication date (day/month/year) | Patent family member(s) | | | Publication date (day/month/year) |
|---|---|---|---|---|---|---|---|
| JP | 2023-99912 | A | 14 July 2023 | (Family: none) | | | |
| JP | 2023-510162 | A | 13 March 2023 | US | 2021/0201464 | A1 | |
| | | | | paragraphs [0085]-[0088], fig. 7 | | | |
| | | | | WO | 2021/133727 | A1 | |
| | | | | EP | 4081937 | A1 | |
| | | | | CN | 114902070 | A | |
| JP | 2017-92622 | A | 25 May 2017 | US | 2018/0315167 | A1 | |
| | | | | paragraphs [0043]-[0048], fig. 3 | | | |
| | | | | WO | 2017/078072 | A1 | |
| | | | | EP | 3373243 | A1 | |
| JP | 6616906 | B1 | 04 December 2019 | WO | 2019/146097 | A1 | |

Form PCT/ISA/210 (patent family annex) (July 2022)

**EP 4 773 073 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021061524 A